(19) **Europäisches Patentamt / European Patent Office / Office européen des brevets**

(11) **EP 4 769 247 A1**

(12) **EUROPEAN PATENT APPLICATION**

(43) Date of publication:
01.07.2026 Bulletin 2026/27

(21) Application number: 26150146.4

(22) Date of filing: 05.01.2026

(51) International Patent Classification (IPC):
$G06N\ 10/70^{(2022.01)}$    $G06N\ 10/20^{(2022.01)}$
$G06N\ 10/40^{(2022.01)}$

(52) Cooperative Patent Classification (CPC):
G06N 10/70; G06N 10/20; G06N 10/40

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 06.02.2025 US 202563754721 P

(71) Applicant: QEDMA Quantum Computing LTD
6902068 Tel Aviv (IL)

(72) Inventors:
• COHEN, Itsik
5258212 RAMAT GAN (IL)
• GURWICH, Ilya
5268101 RAMAT GAN (IL)
• MEYER, Adiel
6250711 TEL-AVIV (IL)
• MELCER, Ron
5333201 GIVATAYIM (IL)

(74) Representative: Lavoix
Bayerstraße 83
80335 München (DE)

(54) **METHODS, SYSTEMS, AND QUANTUM CIRCUITS FOR ROTATING ERROR SUPPRESSION**

(57)  In a first aspect, a method for suppressing rotating implementation errors in a multi-qubit quantum logic operation *G*. The method comprising applying at least one of: a corresponding single-qubit prefix gate, before applying said quantum logic operation *G;* and, a corresponding single-qubit suffix gate, after applying said quantum logic operation *G*. Coefficients of Pauli terms, of any one of said prefix gate and said suffix gate, are based on an accumulated time from a beginning of a quantum circuit to the quantum logic operation *G*. In a second and aspect, a method for rotating dynamical-decoupling for pair-wise application of a quantum logic operation *G*. In further aspects, a characterization method for rotating implementation errors, and systems for implementation of the methods.

EP 4 769 247 A1

**Description**

**CROSS REFERENCE TO RELATED APPLICATIONS**

This application claims priority from US Provisional Patent Application No. 63/754,721 filed on the 6th of February 2024, which is incorporated herein by reference in its entirety

**TECHNOLOGICAL FIELD**

The present disclosure relates to the field of quantum computing.

**BACKGROUND**

The development of useful quantum computers relies crucially on the reduction of implementation errors - differences between the actual and ideal implementations of quantum logic operations. The reduction of implementation errors requires, inter alia, characterization of the implementation errors, so as to correctly apply the error reduction methods (e.g., methods of the 'error mitigation' category).

Certain types of errors, namely coherent errors (including stochastic coherent errors and coherent interactions with an environment, below the relevant correlation time) can be significantly reduced via Quantum Error Suppression (QES). The characteristic feature of QES is that it requires no significant overhead in the number of qubits, circuit depth, or the number of circuit repetitions required to obtain results up to a given statistical error (the total number of 'shots'). A prototypical example of QES is 'dynamical decoupling', where a non-idle quantum circuit implements a better quantum memory than the idle circuit. An additional important example is given by 'Pauli twirling', where a single noisy circuit is replaced by an average over noisy circuits obtained by randomly adding certain Pauli layers. Though a number of distinct circuits must be used, the total number of shots needed is similar to that of the original circuit. In both QES examples, all circuits mentioned are ideally equal, i.e., identical in the absence of errors, and the effect of QES is to average over rotated coherent errors, thus reducing them. Additionally, QES may be performed by accurately characterizing coherent errors and adding small unitary gates to invert these errors.

**GENERAL DESCRIPTION**

Pulse duration of quantum gates is preferably the shortest possible, in order to reduce errors caused by dissipation and/or dephasing. Shorter pulses require larger amplitudes. The combination of a short pulse with a large amplitude, results in a very high rate of change of the amplitude, or in other words, very steep ramps. Consequently, the adiabatic approximation breaks, leading to implementation errors, that may be referred to as "rotating implementation errors".

Further, the rotating implementation errors are non-Markovian. That is, the rotating implementation errors depend, inter-alia, on time. Thus, obtaining a precise characterization, and applying error reduction schemes, are complicated due to the additional variability of the implementation errors, such as variance between applications of the same quantum gate.

The present disclosure provides an error suppression protocol, where rotating implementation errors can be compensated. Further, the present disclosure provides a characterization protocol, for characterizing the rotating implementation errors.

In accordance with a first aspect of the presently disclosed subject matter, there is provided a quantum-computer implemented method for suppressing rotating implementation errors in a quantum circuit. The quantum circuit includes at least one occurrence of a multi-qubit quantum logic operation $G$, applied on a set of qubits of the quantum computer. The method includes, for each qubit included in the set of qubits, applying via a pulse generator of the quantum computer, at least one of: (a) a corresponding single-qubit prefix gate, before applying the at least one occurrence of the quantum logic operation $G$; (b) a corresponding single-qubit suffix gate, after applying the at least one occurrence of the quantum logic operation $G$. Coefficients of Pauli terms, of any one of the prefix gate and the suffix gate, are based on an accumulated time from a beginning of the quantum circuit. The accumulated time is associated with the at least one occurrence of the quantum logic operation $G$.

In addition to the above features, a computer implemented method, for suppressing rotating implementation errors in a quantum circuit, according to this aspect of the presently disclosed subject matter can optionally comprise one or more of features (i) to (xix) below, in any technically possible combination or permutation:

    i. the rotating implementation errors include diabatic errors.
    ii. applying the prefix gate and the suffix gate.

iii. applying any one of the prefix gate and the suffix gate adjacently to the quantum logic operation *G*.

iv. coefficients of Pauli terms, of any one of the prefix gate and the suffix gate, are based on at least one cumulative rotation phase $\zeta$ is based on the accumulated time.

v. the at least one cumulative rotation phase $\zeta$ includes, for at each qubit *j* included in the set of qubits, an associated effective phase $\phi_j^{eff}$.

vi. the associated effective phase is $\phi_j^{eff} = \phi_j + \Delta_j t$. $\phi_j$ is a phase of a driving pulse applied on a corresponding *j*'th qubit included in the set of qubits. The driving pulse is associated with the at least one occurrence of the quantum logic operation *G*. $\Delta_j$ is a detuning of the driving pulse. t is the accumulated time from a beginning of the quantum circuit.

vii. the quantum logic operation *G* is a two-qubit quantum gate.

viii. the quantum logic operation G is a *ZZ* gate.

ix. the rotating implementation errors include any one of: *IX, IY, IZ, XI, VI, ZI, XZ, YZ, ZX, ZY* Pauli error terms.

x. the quantum logic operation *G* is implemented according to an associated KAK decomposition.

xi. implementation of any one of *XX* rotation and *YY* rotation includes shifting a basis of the at least one qubit from a measurement basis to a rotation basis. In addition, applying a ZZ-rotation quantum gate. Further, shifting back a basis of the at least one qubit from the rotation basis to the measurement basis.

xii. the quantum logic operation *G* is a microwave-driven quantum gate.

xiii. the quantum logic operation *G* is any one of: a Cross-Resonance quantum gate, a Cross-Cross-Resonance quantum gate, and/or a Mid-Resonance quantum gate.

xiv. the quantum logic operation *G* is a flux gate.

xv. any one of the prefix gate and the suffix gate are configured to eliminate high order errors included in the rotating implementation errors.

xvi. any one of the prefix gate and the suffix gate are based on a characterization of the quantum logic operation *G*.

xvii. any one of the prefix gate and the suffix gate includes at least one $U_3$ quantum gate.

xviii. including application of virtual-*Z* gates.

xix. implemented as a native multi-pulse gate of said quantum-computer.

In accordance with a second aspect of the presently disclosed subject matter, there is provided a quantum-computer implemented method for suppressing rotating implementation errors in a quantum circuit. The quantum circuit includes at least two occurrences of a multi-qubit quantum logic operation *G*. The quantum logic operation *G* is applied on a set of qubits of the quantum computer. The method includes, for at least one qubit included in the set of qubits, applying via a pulse generator of the quantum computer: (a) a first dynamical decoupling gate $DD_1$ before a first occurrence of the quantum logic operation $G_1$; (b) a second dynamical decoupling gate $DD_2$ after the first occurrence of the quantum logic operation $G_1$ and before a second occurrence of the quantum logic operation $G_2$. The first dynamical decoupling gate $DD_1$ and the second dynamical decoupling gate $DD_2$ having an action $\hat{X}\cos(\psi_1) - \hat{Y}\sin(\psi_1)$. The angle $\psi_1$ is based on a first accumulated time $t_1$ associated with the first occurrence of the quantum logic operation $G_1$. The angle $\psi_1$ is further based on a second accumulated time $t_2$ associated with the second occurrence of the quantum logic operation $G_2$.

In accordance with a third aspect of the presently disclosed subject matter, there is provided a quantum-computer implemented method for suppressing rotating implementation errors in a quantum circuit. The quantum circuit includes at least two occurrences of a multi-qubit quantum logic operation *G*. The quantum logic operation *G* is applied on a set of qubits of the quantum computer. The method includes applying, via a pulse generator of the quantum computer, at least one dynamical decoupling gate $DD_0$ having an action $X\cos(\psi_0) - \hat{Y}\sin(\psi_0)$. The at least one dynamical decoupling gate $DD_0$ is applied to a neighboring qubit communicating with the set of qubits, so as to eliminate crosstalk between the set of qubits and the neighboring qubit. The at least one dynamical decoupling gate $DD_0$ temporally overlaps the logic operation *G*. The angle $\psi_0$ is based on a first accumulated time $t_1$ associated with the first occurrence of the quantum logic operation $G_1$. The angle $\psi_0$ is further based on a second accumulated time $t_2$ associated with the second occurrence of the quantum logic operation $G_2$.

In accordance with a fourth aspect of the presently disclosed subject matter, there is provided a quantum-computer implemented method for suppressing rotating implementation errors in a quantum circuit. The quantum circuit includes at least two occurrences of a multi-qubit quantum logic operation *G*. The quantum logic operation *G* is applied on a set of qubits of the quantum computer. The set of qubits is communicating with a neighboring qubit. The method includes applying a method according to the second aspect of the presently disclosed subject matter to the set of qubits. The method includes applying a method according to the third aspect of the presently disclosed subject matter to the neighboring qubit.

According to some embodiments of the second to fourth aspects, the at least two occurrences of a multi-qubit quantum logic operation *G* are configured to implement an echoed gate $\mathcal{C} = G^2$.

According to some embodiments of the second to fourth aspects, the method may be implemented as a native multi-pulse gate of said quantum-computer.

In accordance with a fifth aspect of the presently disclosed subject matter, there is provided a quantum-computer implemented method for characterizing at least one target error parameter of rotating implementation errors. The rotating implementation errors are in (are associated with) a multi-qubit quantum logic operation $G$. The quantum logic operation $G$ acting on a set of qubits of the quantum computer. The method includes generating at least one characterization sequence $S$ that includes at least one occurrence of the quantum logic operation $G$. The at least one characterization sequence $S$ is configured for amplifying the at least one target error parameter. The least one characterization sequence $S$ includes at least one refocusing sequence, where the at least one refocusing sequence is configured so that the characterization sequence reduces predefined generator terms including crosstalk between the set of qubits and another set of qubits of the quantum-computer. The at least one characterization sequence $S$ includes single-qubit rotations, so as to set an at least one cumulative rotation phase $\zeta$ to a predefined value. The at least one cumulative rotation phase $\zeta$ is associated with the at least one occurrence quantum logic operation $G$. The method further includes characterizing the at least one target error parameter, using the at least one characterization sequence in a characterization protocol.

In addition to the above features, a computer implemented method, for characterizing at least one target error parameter of rotating implementation errors in a multi-qubit quantum logic operation $G,$ according to this aspect of the presently disclosed subject matter can optionally comprise one or more of features (i) to (vii) below, in any technically possible combination or permutation:

  i. characterizing the at least one target error parameter includes applying the at least one characterization sequence $S$ to the set of qubits via a pulse generator of the quantum computer. In addition, measuring the set of qubits using a measurement apparatus of the quantum processor, thereby obtaining a set of measurement values. Further, computing a value of the at least one target error parameter, by fitting a model to the set of measurement values.

  ii. the single-qubit rotations include $Z$ rotations.

  iii. the $Z$ rotations include virtual-$Z$ rotations.

  iv. the rotating implementation errors include diabatic errors.

  v. the quantum logic operation $G$ is a two-qubit quantum gate.

  vi. the rotating implementation errors include any one of: *IX,IY,IZ,XI, YI,ZI,XZ, YZ, ZX, ZY* Pauli error terms.

  vii. the quantum logic operation $G$ is implemented according to a corresponding KAK decomposition.

In accordance with a sixth aspect of the presently disclosed subject matter, there is provided a quantum-computer implemented method for suppressing rotating implementation errors in a quantum circuit. The quantum circuit includes at least one occurrence of a quantum logic operation $G$. The quantum logic operation $G$ is applied on a set of qubits of a quantum processor. The method includes characterizing rotating implementation errors of the quantum logic operation $G$ by a method according to the fifth aspect of the presently disclosed subject matter. Thereby, obtaining characterization of the rotating implementation errors. The method includes executing at least one quantum circuit. The at least one quantum circuit includes at least one occurrence of a quantum logic operation $G$. The at least one quantum circuit is executed according to the characterization of the rotating errors and according to a method according to any one of the first aspect of the presently disclosed subject matter to the fourth aspect of the presently disclosed subject matter.

In accordance with a seventh aspect of the presently disclosed subject matter, there is provided a quantum processing unit. The quantum processing unit includes at least two qubits. The quantum processing unit includes at least one pulse generator coupled to the at least two qubits, so as to apply pulses to the at least two qubits. The quantum processing unit includes a controller. The controller communicating with the at least one pulse generator, so as to provide commands to the at least one pulse generator. The quantum processing unit is configured to implement the method according to any one of the first aspect of the presently disclosed subject matter to the sixth aspect of the presently disclosed subject matter.

In addition to the above features, a quantum processing unit, according to this aspect of the presently disclosed subject matter can optionally comprise one or more of features (i) to (iii) below, in any technically possible combination or permutation:

  i. the at least one pulse generator is configured to apply radio frequency pulses.

  ii. the two qubits are superconducting qubits.

  iii. the at least one pulse generator is configured to apply any one of: infrared pulses, visible light pulses, and ultraviolet pulses.

In accordance with an eighth aspect of the presently disclosed subject matter, there is provided a system including a computer, and a quantum processing unit. The computer having a pulse-level access to the quantum processing unit. The system is configured to implement a method according to any one of the first aspect of the presently disclosed subject matter to the sixth aspect of the presently disclosed subject matter.

According to some embodiments, the quantum processing unit is being according to the seventh aspect of the presently disclosed subject matter.

In accordance with a nineth aspect of the presently disclosed subject matter, there is provided a non-transient computer readable storage medium. The non-transient computer readable storage medium storing computer instructions. The computer instructions are used for causing a computer communicating with a quantum processing unit, to implement a method according to any one of the first aspect of the presently disclosed subject matter to the sixth aspect of the presently disclosed subject matter.

In accordance with a tenth aspect of the presently disclosed subject matter, there is provided a computer implemented method. The method includes simulating the method according to any one of first aspect of the presently disclosed subject matter to the sixth aspect of the presently disclosed subject matter.

In accordance with an eleventh aspect of the presently disclosed subject matter, there is provided a non-transient computer readable storage medium. The non-transient computer readable storage medium storing computer instructions are used for causing a computer to perform a method according to the tenth aspect of the presently disclosed subject matter.

It is noted that the error suppression protocols, and the characterization protocols, can be modified so as to calibrate quantum gates, so as to have controlled rotation terms. E.g., a pulse generator of a quantum computer may be reconfigured according to results of the characterization, so as to provide pulses having desired frequency, shape, and/or phase. The calibrated gate may have desired rotation terms. Thus, the present disclosure also provides a gate calibration protocol. The gate calibration protocol may be used, for example, when recompiling quantum circuits. The action of the rotating implementation errors may rather be seen as desired quantum gates auxiliary to the main (ideal) action of the quantum gate being applied. This may benefit by, e.g., eliminating gates that may be applied by the quantum processing unit, reducing memory requirements, running time, and/or reducing errors.

For brevity of the present disclosure, incoherent implementation errors are neglected. In other words, implementation errors are assumed to be coherent. It is noted that the methods, systems, and quantum circuits disclosed herein are applicable without this assumption.

In the present disclosure, the following terms and their derivatives may be understood according to the below explanations:

The terms "gate" and "quantum gate" may be synonyms.

The phrase "term", when relating to generators of quantum logic operations or implementation errors, may refer to an element of a generator or to a summand in a series expansion. For example, a matrix element in a matrix representation, a summand in a perturbation expansion, or a Pauli matrix in an expansion according to Pauli matrices.

The term "Pauli term" may refer to a matrix included in the Pauli group $\mathcal{P}$. The Pauli group is defined as the subgroup of the unitary group that includes tensor-products of the Pauli matrices. In formula: $\mathcal{P}_n = \{\hat{I}, \hat{X}, \hat{Y}, \hat{Z}\}^{\otimes n}$. The number of qubits may be implicit, and the subscript may be omitted. A Pauli term may be used for representing operators. As a shorthand, Pauli-terms may be denoted by a string of the characters $I, X, Y, Z$ (e.g., $XX, ZYI$). Subscripts/superscripts may be included for any character as may be needed, according to context. A $j$'th character in the string may correspond a $j$'th qubit (e.g., $XY$ denotes $\hat{X}$ corresponding a first qubit and $\hat{Y}$ corresponding a second qubit).

The term "transverse term" may denote a weighted-sum of Pauli-terms, each having no $\hat{Z}$ matrix included in the associated tensor-product.

The term "Pauli gate" may refer to any quantum gate that is represented by a matrix included in the Pauli group $\mathcal{P}$.

The symbol $\otimes$ may denote the Kronecker-product.

The notation $X_j^{\alpha}$ may denote a single-qubit rotation on a $j$'th qubit, the rotation having a mathematical representation of $\hat{X} \cos(\alpha) - \hat{Y} \sin(\alpha)$, wherein $\alpha$ is a real number.

The term "direction" may refer to the phase $\alpha$ of an $X_j^{\alpha}$.

The term "based" may indicate that a first referred quantity may have a dependency on a second referred quantity. In other words, a first referred quantity may be a function of a second referred quantity, where the function is a non-constant.

## BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:

**Fig. 1** schematically illustrates rotating errors.

**Fig. 2A** shows a flowchart illustrating an error suppression method according to embodiments of the present disclosure.

**Fig. 2B** schematically illustrates an error suppressed quantum circuit according to embodiments of the present disclosure.

**Fig. 3A** shows a flowchart schematically illustrating an error suppression method according to embodiments of the present disclosure.

**Fig. 3B** schematically illustrates an error suppressed quantum circuit according to embodiments of the present disclosure.

**Fig. 4** shows a flowchart schematically illustrating a characterization method according to embodiments of the present disclosure.

**Fig. 5** schematically illustrates a computer implementing a method according to embodiments of the present disclosure.

**Fig. 6** schematically illustrates a system implementing a method according to embodiments of the present disclosure.

## DETAILED DESCRIPTION OF EMBODIMENTS

Described herein are some examples of systems and methods useful for suppressing errors in quantum logic operations.

In the following detailed description, numerous specific details are set forth in order to provide a thorough understanding of the subject matter. However, it will be understood by those skilled in the art that some examples of the subject matter may be practiced without these specific details. In other instances, well-known methods, procedures and components have not been described in detail so as not to obscure the description.

As used herein, the phrases "for example," "such as", "for instance" and variants thereof describe non-limiting examples of the subject matter.

Reference in the specification to "one example", "some examples", "another example", "other examples, "one instance", "some instances", "another instance", "other instances", "one case", "some cases", "another case", "other cases" or variants thereof means that a particular described feature, structure or characteristic is included in at least one example of the subject matter, but the appearance of the same term does not necessarily refer to the same example.

It should be appreciated that certain features, structures and/or characteristics disclosed herein, which are, for clarity, described in the context of separate examples, may also be provided in combination in a single example. Conversely, various features, structures and/or characteristics disclosed herein, which are, for brevity, described in the context of a single example, may also be provided separately or in any suitable subcombination.

Unless specifically stated otherwise, as apparent from the following discussions, it is appreciated that throughout the specification discussions utilizing terms such as "computing", "determining", "running", "implementing", "using", "performing", or the like, may refer to the action(s) and/or process(es) of any combination of software, hardware and/or firmware. For example, these terms may refer in some cases to the action(s) and/or process(es) of a programmable machine, that manipulates and/or transforms data represented as physical, such as electronic quantities, within the programmable machine's registers and/or memories into other data similarly represented as physical quantities within the programmable machine's memories, registers and/or other such information storage, transmission and/or display element(s).

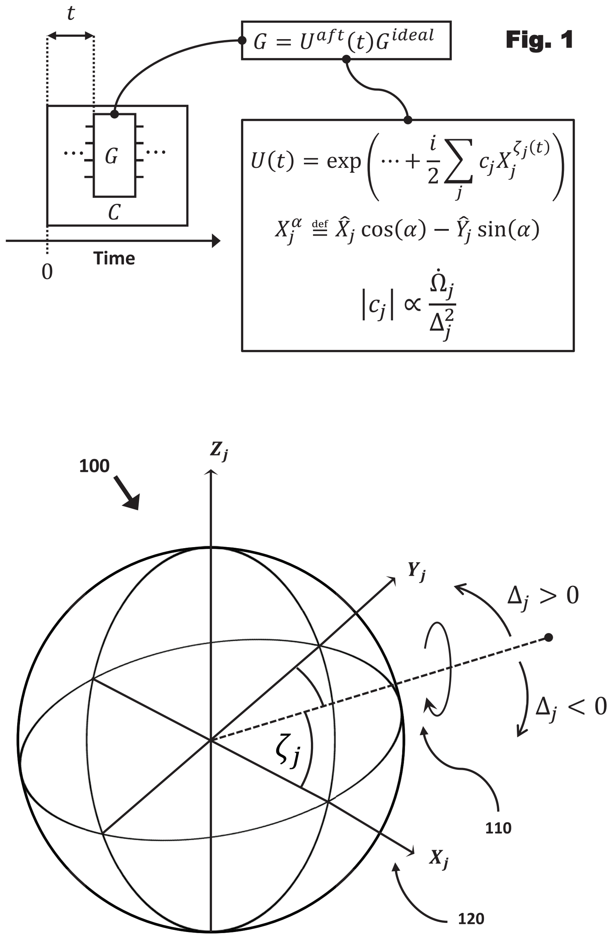

**Fig. 1** schematically illustrates rotating implementation errors. An exemplary quantum circuit $C$ may include an instance of a quantum logic operation $G$. The quantum logic operation G may have an associated accumulated time $t$ from a beginning of the quantum circuit $C$. That is, the time point when the execution of the quantum circuit $C$ begins, may define a zero-point of the time. The execution of the quantum logic operation $G$ may begin at time $t$ relative to the zero-point of the time.

The quantum logic operation $G$ may be subject to implementation errors, i.e., it may deviate from an intended ideal version of the quantum logic operation $G^{ideal}$. The implementation errors may be modelled as a unitary operator $U^{aft}$ acting after the ideal version of the quantum logic operation $G^{ideal}$. The implementation errors (deviations) may include time-dependent (i.e., non-Markovian) errors. In other words, $U^{aft} = U^{aft}(t)$. The non-Markovian errors $U^{aft}(t)$ may include rotating implementation errors. The rotating implementation errors may include single-qubit rotations. The single-qubit rotations may be along a rotation axis **110** that lies in the $X$ - $Y$ plane of the Bloch-sphere **100.** An angle between the rotation axis **110** and the positive direction of the $X$ axis **120** may change in time. The angle between the rotation axis **110** and the positive direction of the $X$ axis **120** may be referred to as a cumulative rotation phase $\zeta$ or as a "direction". It is noted that the rotating implementation errors may include multi-qubit errors, wherein Pauli terms included thereof may rotate for one or more qubits, for example, a $X^{\beta(t)}X^{\gamma(t)}$ error term.

Different qubits may be subject to different rotating implementation errors. A single-qubit rotation associated with a $j$'th qubit may be according to an associated cumulative rotation phase $\zeta_j(t)$.

According to the Landau-Zener approximation, magnitudes of different terms of the rotating implementation errors may be proportional to a rate-of-change (time derivative) of corresponding effective Rabi-frequency $\dot{\Omega}_j$, divided by the inverse-square of a corresponding detuning $\Delta_j^{-2}$. The rate-of-change of an effective Rabi-frequency $\dot{\Omega}_j$ may be proportional to a rate-of-change of an amplitude of a driving pulse applied on the corresponding ($j$'th) qubit.

If any two qubits communicate (i.e., interact), the relation between effective Rabi-frequencies and rate-of-change of an amplitudes may be more complicated. For example, the relation may be a matrix, that may relate a vector representing the effective Rabi-frequencies to a vector representing the rates-of-change of amplitudes.

Thus, depending on resonance frequencies of the qubits, corresponding detunings of driving pulses from these resonance frequencies, and on rates-of-change of amplitudes, very large rotating implementation errors may be experienced. Magnitudes of the rotating implementation errors can be widely distributed.

*Derivation of examples of rotating errors*

Derived herein are some, non-exhaustive, examples of rotating implementation errors. The convention may be where a phase of a resonant single-qubit gate driving pulse may determine the $X, Y$ axes of the quantum operation. Namely, a qubit $j$ may have a bare frequency $\omega_{0,j}$. The qubit $j$ may be operated with a resonant driving field (i.e., a driving pulse) that may have a driving frequency $\omega_{d,j} = |\omega_{0,j}|$, may have an amplitude $\Omega_j^R$, and may have a phase $\phi_j^R$.

The Hamiltonian in the lab frame may be:

$$H_{L,j} = \frac{\omega_{0,j}}{2} Z_j + \Omega_j^R X_j \cos\left(\omega_{d,j} t + \phi_j^R\right)$$

The Hamiltonian in the interaction picture may be:

$$H_{I,j} = \frac{\Omega_j^R}{2} X_j^{-\theta(\omega_{0,j})\phi_j^R} = \frac{\Omega_j^R}{2}\left[\hat{X}_j \cos\left(\phi_j^R\right) - \hat{Y}_j \sin\left(\theta\left(\omega_{0,j}\right)\phi_j^R\right)\right]$$

$\theta(x)$ may denote the sign function. The phase $\theta\left(\omega_{0,j}\right)\phi_j^R$ may determine the direction in the $X$ - $Y$ plane. Therefore, the quantum operation on the j'th qubit may be $U = exp(-iH_{I,j}t_R)$, where $t_R$ may denote a duration of the resonant driving pulse.

Generating two-qubit-gate may be achieved by applying driving fields (pulses) on one or both of the two active qubits participating in the gate. The two (active) qubits may be detuned from resonance. Namely, the $j$'th qubit may be associated with a detuning $\Delta_j = \omega_{0,j} - \theta(\omega_{0,j})\omega_{d,j}$. The direction of the transverse terms may rotate with a frequency that may be equal to the detuning $\Delta_j$, around the $Z$-axis, with respect to the direction determined by the convention. The direction may be determined by the time accumulated from the beginning of the circuit to the beginning of the driving pulse $t$, and the phase of the driving field $\phi_j$:

$$\phi_j^{eff}(t) = \Delta_j t + \phi_j$$

In other words, $\phi_j^{eff}$ may be an associated cumulative rotation phase. Rotation of the transverse terms is depicted in **Fig. 1,** where for $\Delta > 0$ the transverse terms rotate counterclockwise, and for $\Delta < 0$ the transverse terms rotate clockwise.

It is noted that a quantum gate may include application of a plurality of pulses. The derivation hereinbelow holds for each pulse. In other words, a pulse index may be appended to notation of quantities that may be associated with a specific pulse, such as time duration, detuning, and driving phase.

In the examples, two reference frames may be used. The first frame may be referred to as a "time independent frame", where the lab frame is rotated in the frequency of the driving pulse. The second frame may be referred to as a "resonant frame", where the lab frame is rotated in the bare resonance frequency of qubits.

As a first example, a cross-resonance (CR) gate may be considered. In a CR gate, two qubits, referred to as "control qubit" and "target qubit", are communicating (interacting). A driving pulse may be applied to the control qubit.

Thereby, a CNOT gate (or an equivalent, such as a CZ gate) may be (approximately) applied on the two qubits. The driving pulse may be resonant with the target qubit. However, the driving pulse may be detuned from the control qubit. Thus, rotating errors may be present on the control qubit.

In the time independent frame, the evolution operator is:

$$U_{CR} = \exp\left(-it_g\left(\frac{\Delta_1}{2}Z_1 + \frac{\epsilon}{2}X_1^{\phi_1} + gZX^{\phi_1}\right)\right)$$

The index 1 denotes here the control qubit. The coefficient $g$ relates to an effective induced coupling between the two qubits. The phase $\phi_1$ denotes the phase of the driving pulse. $t_g$ denotes the time duration of applying the gate. The term $X_1^{\phi_1}$ is a rotating implementation error, having a magnitude $\varepsilon$, caused by the diabatic (non-adiabatic) nature of the driving pulse. Rotating the evolution operator from the time independent frame to the resonant frame gives:

$$U_{rot}(t) = \exp\left(-i\frac{\Delta_1}{2}Z_1 t\right)$$

$$U_{CR}^{res} = U_{rot}^\dagger(t + t_g)U_{CR}U_{rot}(t)$$

$$U_{CR}^{res} = \exp\left(i\frac{\Delta_1}{2}Z_1 t\right)\exp\left(-it_g\left(\frac{\Delta_1}{2}Z_1 + \frac{\epsilon}{2}X_1^{\phi_1+\Delta_1 t} + gZX^{\phi_1}\right)\right)$$

Thus, the associated cumulative rotation phase is $\phi_1^{eff}(t) = \phi_1 + \Delta_1 t$

As a second example, a mid-resonance (MR) gate may be considered. In brief, a MR gate is a two-qubit quantum gate where a driving pulse is applied to each of the two qubits. The driving frequency of a driving pulse associated with the first qubit, may be equal to the driving frequency of a driving pulse associated with the second qubit. Driving amplitudes and driving phases, associated with the different qubits, may or may not be equal.

During the MR gate, both qubits may be driven off-resonantly, causing rotating implementation errors. The case where the driving frequency is the average of the resonance frequencies of the two qubits, i.e., $\omega_d = \frac{1}{2}(\omega_{0,1} + \omega_{0,2})$, is illustrative. In the time independent frame, the evolution operator is:

$$U_{MR} = \exp\left(-it_g\left(\sum_{j=1,2}\left(\frac{\Delta_j}{2}Z_j + \frac{\epsilon_j}{2}X_j^{\phi_j}\right) + gZZ\right)\right)$$

Rotating the evolution operator from the time independent frame to the resonant frame gives:

$$U_{rot}(t) = \exp\left(-it\sum_{j=1,2}\frac{\Delta_j}{2}Z_j\right)$$

$$U_{MR}^{res} = U_{rot}^\dagger(t + t_g)U_{MR}U_{rot}(t)$$

$$U_{MR}^{res} = \exp\left( it \sum_{j=1,2} \frac{\Delta_j}{2} Z_j \right) \exp\left( -it_g \left( \sum_{j=1,2} \left( \frac{\Delta_j}{2} Z_j + \frac{\epsilon_j}{2} X_j^{\phi_j + \Delta_j t} \right) + gZZ \right) \right)$$

Thus, the associated cumulative rotation phases are $\phi_j^{eff}(t) = \phi_j + \Delta_j t$.

As a third example, a flux gate via a coupler may be considered. During application of the flux gate, the bare self-frequencies of both the two active qubits and the coupler qubit may be altered in comparison to the bare self-frequencies of the idle or single-qubit gates. While driving fields might not be applied, diabatic transverse directional transitions might be still generated via a 'flip-flop' coupling (i.e., excitation preserving coupling) between all pairs of qubits. For this gate, the symbol $\Delta$ may denote a change of the self-frequency of a qubit. In the time independent frame, the evolution operator is:

$$U_{flux} = \exp\left( -it_g \left( \sum_{j=0,1,2} \left[ \frac{\Delta_j}{2} Z_j + \epsilon_{j,j+1} \left( \sigma_+^{(j)} \sigma_-^{(j+1)} + \sigma_+^{(j+1)} \sigma_-^{(j)} \right) \right] + gZZ \right) \right)$$

the $j + 1$ index should be taken modulu-3, that is, for the index $j = 2$, the $j + 1$ index refers to the zeroth index.

Rotating the evolution operator from the time independent frame to the resonant frame gives:

$$U_{rot}(t) = \exp\left( -it \sum_{j=0}^{2} \frac{\Delta_j}{2} Z_j \right)$$

$$U_{flux}^{res} = U_{rot}^{\dagger}(t + t_g) U_{flux} U_{rot}(t)$$

$$U_{flux} = \exp\left( it \sum_{j=0}^{2} \frac{\Delta_j}{2} Z_j \right) \exp\left( -it_g \left( \sum_{j=0}^{2} \left[ \frac{\Delta_j}{2} Z_j \right. \right. \right.$$

$$\left. \left. \left. + \epsilon_{j,j+1} \left( e^{i(\Delta_j - \Delta_{j+1})t} \sigma_+^{(j)} \sigma_-^{(j+1)} + e^{-i(\Delta_j - \Delta_{j+1})t} \sigma_+^{(j+1)} \sigma_-^{(j)} \right) \right] + gZZ \right) \right)$$

Thus, the associated cumulative rotation phases are $\phi_j^{eff}(t) = \left( \Delta_j - \Delta_{j+1} \right) t$.

It is noted that the rotating implementation errors in these examples may also include *XX, YY, XY, YX* error terms. These rotating implementation errors are currently neglected, as may be explained hereinbelow.

*Suppression of rotating errors*

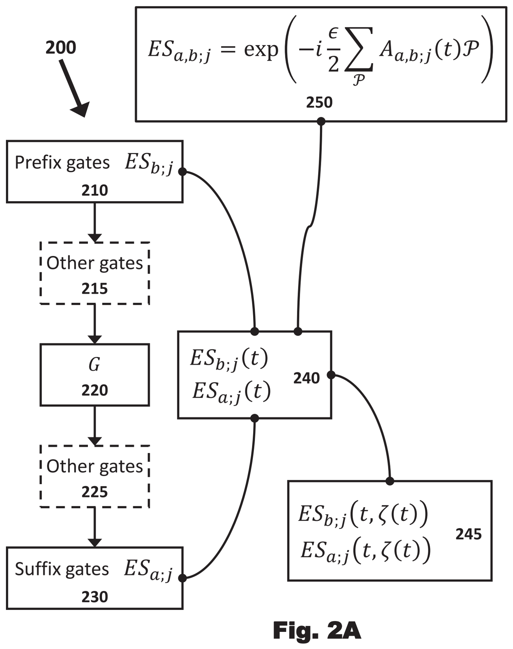

**Fig. 2A** shows a flowchart schematically illustrating an error suppression method **200** according to embodiments of the present disclosure. The method **200** may be implemented by a quantum computer. The method **200** may be for suppressing rotating implementation errors in a quantum circuit. In some embodiments, the rotating implementation errors may include diabatic errors.

The quantum circuit may include at least one occurrence of a multi-qubit quantum logic operation *G*. The quantum logic operation *G* may be applied on a set of qubits of the quantum computer.

The method **200** may include a step **210** of applying prefix gates. The prefix gates may include single qubit rotations. In some embodiments, the prefix gates may consist of single qubit rotations. In some embodiments, the prefix gates may include quantum gates for each of the qubits included in the set of qubits. A single-qubit prefix gate applied on the $j$'th qubit may be denoted $ES_{b;j}$.

The method **200** may include a step **220** of applying the quantum logic operation $G$. In some embodiments, the quantum logic operation $G$ may include a plurality of quantum gates. In other words, in some embodiments, the quantum logic operation G may be a subcircuit.

The method **200** may include a step **230** of applying suffix gates. The suffix gates may include single qubit rotations. In some embodiments, the suffix gates may consist of single qubit rotations. In some embodiments, the suffix gates may include quantum gates for each of the qubits included in the set of qubits. A single-qubit suffix gate applied on the $j$'th qubit may be denoted $ES_{a;j}$.

In other words, in some embodiments, the method **200** may include, for each qubit included in the set of qubits, applying via a pulse generator of the quantum computer, at least one of:

a. A corresponding single-qubit prefix gate, before executing the at least one occurrence of the quantum logic operation $G$, and
b. A corresponding single-qubit suffix gate, after executing the at least one occurrence of the quantum logic operation $G$.

In some embodiments, the method **200** may include applying the prefix gate and the suffix gate. In other words, the method **200** may include the step **210** of applying prefix gates and may also include the step **230** of applying suffix gates.

In some embodiments, the method **200** may include applying any one of the prefix gate and the suffix gate adjacently to the quantum logic operation $G$. In other words, no quantum gate may be applied between the prefix gates and the quantum logic operation $G$, and/or no quantum gate may be applied between the quantum logic operation $G$ and the suffix gates.

In some embodiments, the method **200** may include a step **215** of applying quantum gates between the prefix gates $ES_{b;j}$ and the quantum logic operation $G$. In some embodiments, the method **200** may include a step **225** of applying quantum gates between the quantum logic operation $G$ and the suffix gates $ES_{a;j}$. In some embodiments, the method **200** may include the step **215** of applying quantum gates between the prefix gates $ES_{b;j}$ and the quantum logic operation $G$ and may also include the step **225** of applying quantum gates between the quantum logic operation $G$ and the suffix gates $ES_{a;j}$. Steps **215** and **225** may be included, for example, in order to control the action of the quantum logic operation $G$. Examples include shift of basis, twirling, echoing, and selecting error terms that may be mitigated by the method **200**.

Generally, the prefix gates $ES_{b;j}$ and suffix gates $ES_{a;j}$ may be configured for suppressing rotating implementation errors. The prefix gates $ES_{b;j}$ and suffix gates $ES_{a;j}$ may be based on (i.e., be a function of) an accumulated time t from a beginning of the quantum circuit **240** (e.g., as described in relation to **Fig. 1**). In some embodiments, coefficients of Pauli terms, of any one of the prefix gates $ES_{b;j}$ and the suffix gates $ES_{a;j}$, may be based on (i.e., be a function of) the accumulated time $t$ from a beginning of the quantum circuit **250**.

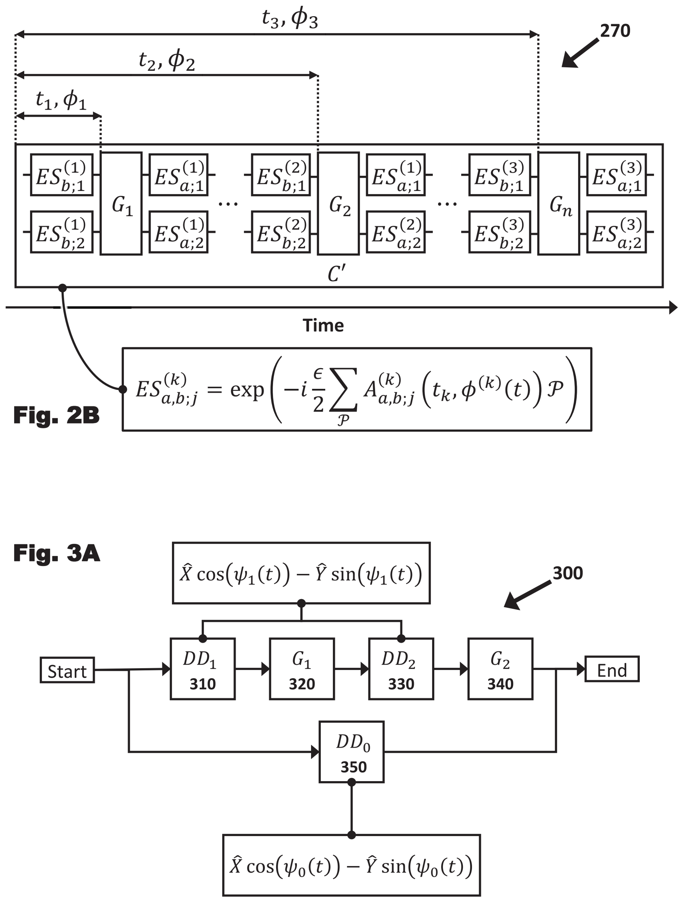

The accumulated time $t$ may be associated with the at least one occurrence of the quantum logic operation $G$. In other words, if a quantum circuit includes a plurality of occurrences of the quantum logic operation $G$, then each occurrence of the quantum logic operation $G_n$ may be associated with a corresponding accumulated time $t_n$. **Fig. 2B** illustrates an exemplary quantum circuit **270** implementing the method **200**. The quantum circuit **270** includes three occurrences of the quantum logic operation $G$. For each occurrence of the quantum logic operation $G$, both prefix gates $ES_{b;j}$ and suffix gates $ES_{a;j}$ are included (i.e., steps **210** and **230** are both performed by the quantum circuit **270**).

Generally, the accumulated time $t$ may be defined with reference to a time point that may be distinct from the beginning of the quantum circuit. For example, in some embodiments, the accumulated time $t$ may be defined with reference to a specific quantum gate that may be included in the quantum circuit (e.g., beginning of application, or end of application, of the specific quantum gate). In some embodiments, the accumulated time $t$ may be defined with reference to a quantum circuit that may not include the at least one occurrence of the quantum logic operation $G$. In some embodiments, the accumulated time $t$ may be defined with reference to a timepoint being after applying the at least one occurrence of the quantum logic operation $G$.

In some embodiments, coefficients of Pauli terms, of any one of the prefix gate and the suffix gate, may be based on at least one cumulative rotation phase $\zeta$. The at least one cumulative rotation phase $\zeta$ may be based on the accumulated time $t$ **245**. In some embodiments, the at least one cumulative rotation phase $\zeta$ may include, for at each qubit $j$ included in the set of qubits, an associated effective phase $\phi_j^{eff}$. Examples for a cumulative rotation phase $\zeta$ and associated effective phases $\phi_j^{eff}$, are described hereinabove in the derived examples of rotating implementation errors.

In some embodiments, the associated effective phase $\phi_j^{eff}$ may be $\phi_j^{eff} = \Delta_j t + \phi_j$. The $\phi_j$ may be a

phase of a driving pulse applied on a corresponding j'th qubit included in the set of qubits. The driving pulse may be associated with the at least one occurrence of the quantum logic operation *G*. In other words, the driving pulse may be applied in a process of applying the quantum logic operation *G*. The $\Delta_j$ may be a detuning of the driving pulse (i.e., a detuning between the driving frequency of the pulse, and the resonance frequency of the corresponding *j*'th qubit). *t* may be the accumulated time from a beginning of the quantum circuit.

In some embodiments, the quantum logic operation *G* may be a two-qubit quantum gate. In some embodiments, the quantum logic operation *G* may be a *ZZ* gate. In some embodiments, the rotating implementation errors may include any one of: *IX, IY, IZ, XI, YI, ZI, XZ, YZ, ZX, ZY* Pauli error terms.

In some embodiments, the quantum logic operation *G* may be implemented according to an associated KAK decomposition. The KAK decomposition is as follows. Any two-qubit operation may be equivalent to a two-qubit operation of a type $\exp\left(-\frac{i}{2}[\theta_{XX}XX + \theta_{YY}YY + \theta_{ZZ}ZZ]\right)$ where KAK coefficients $\theta_{XX}, \theta_{YY}, \theta_{ZZ}$ being real numbers, that may be preceded and/or may be succeeded by single-qubit operations, on any one of the two qubits.

In other words, when performing the method **200**, at least one occurrence of the quantum logic operation *G* may be implemented by applying *XX, YY, ZZ* rotations to the two qubits, where single-qubit operations may precede the *XX, YY, ZZ* rotations and/or single-qubit operations may succeed the *XX, YY, ZZ* rotations. The *XX, YY, ZZ* rotations, together with the single-qubit rotations, may have an action that is equal to the action of the quantum logic operation *G*. It is noted that using base shifting, the set of *XX, YY, ZZ* rotations may be replaced by a set of *XY, YZ, ZX* rotations and/or by a set of *XZ, YX, ZY* rotations.

Generally, using base shifting, any two-qubit gate included in the KAK decomposition may be implemented by a combination of a specific two-qubit Pauli gate and base shifting. It is noted that base shifting can be performed by application of single-qubit gates. As a specific example, in some embodiments, any one of *XX* rotation and *YY* rotation may be implemented via base shifting and a *ZZ* rotation. In yet other words, implementation of any one of *XX* rotation and *YY* rotation may include:

a. Shifting a basis of at least one qubit from a measurement basis to a rotation basis. For example, from *Z*-base to *X*-base.
b. Applying a *ZZ*-rotation quantum gate.
c. Shifting back a basis of the at least one qubit from the rotation basis to the measurement basis. For example, from *X*-base to *Z*-base.

It is noted that the single-qubit operations included in the definition of the KAK decomposition and/or base-shifting may be different than the other gates that may be applied in steps **215 225**. In some embodiments, the method may include a step of recompilation, so as to merge single-qubit operations included in the KAK decomposition and/or base-shifting, with the other gates that may be applied in steps **215 225.**

Generally, the prefix gates $ES_{b;j}$ and suffix gates $ES_{a;j}$ may depend on the characteristics of the quantum logic operation *G*. In other words, the prefix gates $ES_{b;j}$ and suffix gates $ES_{a;j}$ may depend on an action performed by the quantum logic operation *G* on the qubits it may be applied. In some embodiments, any one of the prefix gates $ES_{b;j}$ and the suffix gates $ES_{a;j}$ may be based on a model of the quantum logic operation *G*. In some embodiments, any one of the prefix gates $ES_{b;j}$ and the suffix gates $ES_{a;j}$ may be based on a characterization of the quantum logic operation *G*.

Examples for the prefix gates $ES_{b;j}$ and suffix gates $ES_{a;j}$ may be described hereinbelow. The examples are for an operation of the type $G^{ideal} = \exp\left(-\frac{i}{2}[\theta_{XX}XX + \theta_{YY}YY + \theta_{ZZ}ZZ]\right)$. In other words, implementation of the quantum logic operation *G* according to an associated KAK decomposition is presumed.

The rotating implementation errors may be expressed as a weighted sum of Pauli terms, where weights may depend on the accumulated time t and on the (at least one) phase of the driving pulse $\phi$:

$$U^{aft} = \exp\left(-i\frac{\epsilon}{2}\sum_Q C_Q(t,\phi)Q\right)$$

where $Q \in \{IX, IY, IZ, XI, YI, ZI, XZ, YZ, ZX, ZY\}$ and where $\varepsilon$ may be a magnitude of the rotating implementation errors. As was indicated hereinabove, in the examples of rotating implementation errors, the rotating implementation errors may also include *XX, YY, XY, YX* error terms. These rotating implementation errors may be neglected, as they may be suppressed via a method described hereinbelow, distinct from the method **200**. As indicated hereinabove, the error terms that may be suppressed by the method **200,** may be selected. Thus, the *XX, YY, XY, YX* error terms may be selected to be suppressed.

The prefix gates $ES_{b;j}$ and suffix gates $ES_{a;j}$ may also be expressed as a weighted sum of Pauli terms, where weights may depend on the accumulated time t and on the (at least one) phase of the driving pulse $\phi$:

$$ES_{b,a;j}(t, \phi) = \exp\left(-i\frac{\epsilon}{2}\sum_P D_{a,b;j}^{(P)}(t, \phi)P\right)$$

where $P \in \mathcal{P}_1$. The prefix gates $ES_{b;j}$ and suffix gates $ES_{a;j}$ may be assumed as ideal. For brevity, the implicit time and phase dependency of $ES_{b,a;j}(t, \phi)$, $C_Q(t, \phi)$, and $D_{a,b;j}^{(P)}(t, \phi)$ is omitted in the following expressions.

The weights $D_{a,b;j}^{(P)}$ may depend on properties of the KAK coefficients. A first category may be if all three KAK coefficients are non-zero and are distinct from each other. The weights $D_{a,b;j}^{(P)}$ may be:

$$D_{b;1}^{(X)} = -2\frac{C_{ZY}\cos\theta_{ZZ}\sin\theta_{YY} + C_{YZ}\cos\theta_{YY}\sin\theta_{ZZ}}{\cos 2\theta_{YY} - \cos 2\theta_{ZZ}}$$

$$D_{b;2}^{(X)} = -2\frac{C_{YZ}\cos\theta_{ZZ}\sin\theta_{YY} + C_{ZY}\cos\theta_{YY}\sin\theta_{ZZ}}{\cos 2\theta_{YY} - \cos 2\theta_{ZZ}}$$

$$D_{b;1}^{(Y)} = 2\frac{C_{ZX}\cos\theta_{ZZ}\sin\theta_{XX} + C_{XZ}\cos\theta_{XX}\sin\theta_{ZZ}}{\cos 2\theta_{XX} - \cos 2\theta_{ZZ}}$$

$$D_{b;2}^{(Y)} = 2\frac{C_{XZ}\cos\theta_{ZZ}\sin\theta_{XX} + C_{ZX}\cos\theta_{XX}\sin\theta_{ZZ}}{\cos 2\theta_{XX} - \cos 2\theta_{ZZ}}$$

$$D_{b;1}^{(Z)} = 0$$

$$D_{b;2}^{(Z)} = 0$$

$$D_{a;1}^{(X)} = -C_{XI} - D_{b;1}^{(X)}\cos\theta_{ZZ}\cos\theta_{YY} - D_{b;2}^{(X)}\sin\theta_{ZZ}\sin\theta_{YY}$$

$$D_{a;2}^{(X)} = -C_{IX} - D_{b;2}^{(X)}\cos\theta_{ZZ}\cos\theta_{YY} - D_{b;1}^{(X)}\sin\theta_{ZZ}\sin\theta_{YY}$$

$$D_{a;1}^{(Y)} = -C_{YI} - D_{b;1}^{(Y)}\cos\theta_{ZZ}\cos\theta_{XX} - D_{b;2}^{(Y)}\sin\theta_{ZZ}\sin\theta_{XX}$$

$$D_{a;2}^{(Y)} = -C_{IY} - D_{b;2}^{(Y)}\cos\theta_{ZZ}\cos\theta_{XX} - D_{b;1}^{(Y)}\sin\theta_{ZZ}\sin\theta_{XX}$$

$$D_{a;2}^{(Z)} = -C_{IZ} - D_{b;2}^{(Z)}$$

$$D_{a;2}^{(Z)} = -C_{IZ} - D_{b;2}^{(Z)}$$

A second category may be if only two KAK coefficients are non-zero, and the non-zero KAK coefficients are distinct from each other. Without loss of generality, $\theta_{ZZ} = 0$ will be presumed. The expressions for the weights $D_{a,b;j}^{(P)}$ may be:

$$D_{b;1}^{(X)} = \frac{C_{ZY}}{\sin\theta_{YY}} \qquad D_{b;2}^{(X)} = \frac{C_{YZ}}{\sin\theta_{YY}}$$

$$D_{b;1}^{(Y)} = -\frac{C_{ZX}}{\sin\theta_{XX}} \qquad D_{b;2}^{(Y)} = -\frac{C_{XZ}}{\sin\theta_{XX}}$$

$$D_{b;1}^{(Z)} = 0 \qquad D_{b;2}^{(Z)} = 0$$

$$D_{a;1}^{(X)} = -C_{XI} - D_{b;1}^{(X)}\cos\theta_{YY} \qquad D_{a;2}^{(X)} = -C_{IX} - D_{b;2}^{(X)}\cos\theta_{YY}$$

$$D_{a;1}^{(Y)} = -C_{YI} - D_{b;1}^{(Y)}\cos\theta_{XX} \qquad D_{a;2}^{(Y)} = -C_{IY} - D_{b;2}^{(Y)}\cos\theta_{XX}$$

$$D_{a;1}^{(Z)} = -C_{ZI} - D_{b;1}^{(Z)} \qquad D_{a;2}^{(Z)} = -C_{IZ} - D_{b;2}^{(Z)}$$

In the first and second categories, if two coefficients are equal, then without loss of generality (due to change of basis), $\theta_{XX} = \theta_{YY}$ will be presumed. The weights $D_{a,b;j}^{(P)}$ may optionally be changed so:

$$D_{b;1}^{(Z)} = D_{b;2}^{(Z)} \neq 0$$

A third category may be if only one KAK coefficient is non-zero. Without loss of generality, $\theta_{ZZ} \neq 0$ will be presumed. The weights $D_{a,b;j}^{(P)}$ may be:

$$D_{b;1}^{(X)} = -\frac{C_{YZ}}{\sin\theta_{ZZ}} \qquad D_{b;2}^{(X)} = -\frac{C_{ZY}}{\sin\theta_{ZZ}}$$

$$D_{b;1}^{(Y)} = \frac{C_{XZ}}{\sin\theta_{ZZ}} \qquad D_{b;2}^{(Y)} = \frac{C_{ZX}}{\sin\theta_{ZZ}}$$

$$D_{a;1}^{(X)} = -C_{XI} - D_{b;1}^{(X)}\cos\theta_{ZZ} \qquad D_{a;2}^{(X)} = -C_{IX} - D_{b;2}^{(X)}\cos\theta_{ZZ}$$

$$D_{a;1}^{(Y)} = -C_{YI} - D_{b;1}^{(Y)}\cos\theta_{ZZ} \qquad D_{a;2}^{(Y)} = -C_{IY} - D_{b;2}^{(Y)}\cos\theta_{ZZ}$$

$$D_{b;1}^{(Z)} + D_{a;1}^{(Z)} = -C_{ZI} \qquad D_{b;2}^{(Z)} + D_{a;2}^{(Z)} = -C_{IZ}$$

Application of the method 200 with these weights $D_{a,b;j}^{(P)}$ for the prefix gates $ES_{b;j}$ and suffix gates $ES_{a;j}$ may suppress first-order errors. That is, denoting:

$$ES_{b,a} = ES_{b,a;1} \otimes ES_{b,a;2}$$

then for $\varepsilon \ll 1$:

$$ES_a \cdot G \cdot ES_b = G^{ideal} \exp\left(-i\mathcal{O}(\epsilon^2)\right)$$

In some embodiments, the method **200** may include suppressing high order errors included in the rotating implementation errors. For example, performing steps **215** and/or **225** according to the Trotter-Suzuki method or according to the Solovay-Kitaev theorem, combined with adjusting the gate amplitudes to compensate for higher order over-rotations. In some embodiments, any one of the prefix gates $ES_{b;j}$ and suffix gates $ES_{a;j}$ may be configured to eliminate high order errors included in the rotating implementation errors.

Generally, the method **200** may be applicable for different types of quantum gates and for different types of qubits. In some embodiments, the quantum logic operation $G$ may be a microwave-driven quantum gate. In some embodiments, the quantum logic operation $G$ may be any one of: a Cross-Resonance quantum gate, a Cross-Cross-Resonance quantum gate, and/or a Mid-Resonance quantum gate. In some embodiments, the quantum logic operation $G$ may be a flux gate.

In some embodiments, any one of the prefix gates $ES_{b;j}$ and the suffix gates $ES_{a;j}$ may include at least one $U_3$ quantum gate. A $U_3$ quantum gate is a single-qubit gate, defined as having an action being equal to:

$$U_3 = \exp\left(-i\frac{\alpha_3}{2}Z\right)\sqrt{X}\exp\left(-i\frac{\alpha_2}{2}Z\right)\sqrt{X}\exp\left(-i\frac{\alpha_1}{2}Z\right) = \exp\left(-i\frac{\chi_z}{2}Z\right)\sqrt{X^{\alpha_1+\alpha_2}}\sqrt{X^{\alpha_1}}$$

$$\chi_z = \alpha_1 + \alpha_2 + \alpha_3$$

In other words, a $U_3$ gate may be equivalent to a sequence of: (1) $Z$-rotation by a first angle; (2) square root of $X$ gate; (3) $Z$-rotation by a second angle; (4) square root of $X$ gate; (5) $Z$-rotation by a third angle. A $U_3$ quantum gate may be a compound gate, i.e., a $U_3$ quantum gate may be implemented by application of more than one quantum gate native to the quantum computer.

The three angles $\alpha_1, \alpha_2, \alpha_3$ of a $U_3$ quantum gate may be Euler angles, i.e., $\alpha_1, \alpha_2, \alpha_3$ may correspond to $\alpha, \beta, \gamma$ of a general single qubit rotation $R = \exp\left(-i\frac{\gamma}{2}Z\right)\exp\left(-i\frac{\beta}{2}X\right)\exp\left(-i\frac{\alpha}{2}Z\right)$. A $U_3$ quantum gate, having angles $\alpha_1, \alpha_2, \alpha_3$ that may correspond to angles $\alpha, \beta, \gamma$ of a general single qubit rotation $R$, may be denoted as $U_3(R)$. If $\chi_z \neq 2\pi k$ for an integer $k$, excess (or insufficient) $Z$-rotation may occur. In some embodiments, the excess $Z$-rotation may be corrected by application of a virtual-$Z$ gate. A virtual-$Z$ gate having a rotation angle $\theta$ may be denoted as $v_z(\theta)$.

It is noted that application of virtual-$Z$ gates is independent of $U_3$ gates. In other words, virtual-$Z$ gates may be applied in absence of $U_3$ gates. Non-virtual $Z$-rotations may be applied in the presence of $U_3$ gates.

The benefit of the $U_3$ quantum gate may be seen as follows. The implementation of the prefix gates $ES_{b;j}$ and/or the suffix gates $ES_{a;j}$ may include general single qubit rotations. However, depending on the configuration of the quantum-computer, availability of general single qubit rotations may be limited. Moreover, the fidelity of the general single qubit rotations may be low. In such conditions, the general single qubit rotations may beneficially be replaced by $U_3$ quantum gates. Further, in some applications, particularly when twirling is used, two-qubit gate layers may be followed and/or preceded by single-qubit gate layers. The prefix gates $ES_{b;j}$ and/or the suffix gates $ES_{a;j}$ may be merged (via recompilation) into a single-qubit gate layer, resulting a $U_3$ quantum operation.

As examples, application of the method **200** for CR gates and for MR gates, in conjunction with application of $U_3$ gates, may be described. In these examples, the CR/MR gate may be preceded by single-qubit operations (e.g., a single-qubit gate layer), that may be denoted $\hat{O}$. The prefix gates $ES_{b;j}$ and the preceding gates $\hat{O}$ may be merged, resulting a $U_3$ gate.

In a MR gate, a phase difference $\phi_1 - \phi_2$ of the driving pulses may determine a magnitude of the $ZZ$ term included in the action of the gate. E.g., for $\phi_1 - \phi_2 = 0, \pi$ the magnitude of the $ZZ$ term may be maximal, whereas for $\phi_1 - \phi_2 = \pm\frac{\pi}{2}$ the magnitude of the $ZZ$ term may vanish. Therefore, elimination of excess $Z$-rotation, that may result from the $U_3$ gate, may be required. Elimination of excess $Z$-rotation may be performed by modifying the ES functions to $ES_{a,b;j}^{(mod)}$, as is explained hereinbelow.

In order to eliminate the excess Z-rotation, a virtual-Z gate may be inserted between the $U_3$ gate and the MR gate. The error-suppressed MR gate $MR_{ES}$, together with the preceding gates $\hat{\mathcal{O}}$, may be expressed as:

$$MR_{ES}\hat{\mathcal{O}} = ES_a^{(mod)} MR(t,\phi_j) \prod_{j=0,1} v_z\left(-\chi_z^{(j)}\right) U_3\left(ES_{b;j}^{(mod)}\hat{\mathcal{O}}_j\right)$$

where an angle $\chi_z^{(j)}$ equals a sum of the three Euler-angles associated with $U_3\left(ES_{b;j}^{(mod)}\hat{\mathcal{O}}_j\right)$. The $U_3$ gates succeeded by the virtual-Z gates may be equal to:

$$\prod_{j=0,1} v_z\left(-\chi_z^{(j)}\right) U_3\left(ES_{b;j}^{(mod)}\hat{\mathcal{O}}_j\right) = \prod_{j=0,1} \sqrt{X^{\alpha_1^j + \alpha_2^j}}\sqrt{X^{\alpha_1^j}}$$

Note that the products over the two qubits is equivalent to a tensor product. The action of the error-suppressed MR gate $MR_{ES}$ may be:

$$MR_{ES}(t,\phi_j) = \exp\left(-i\frac{\theta_{ZZ}}{2}ZZ\right)$$

The non-error-suppressed MR gate may be expressed as:

$$MR(t,\phi_j) = ES_a^{-1}\exp\left(-i\frac{\theta_{ZZ}}{2}ZZ\right)ES_b^{-1}$$

A position of the virtual-Z gate in the quantum circuit may be shifted, so as to be after the MR gate. Defining rotated error-suppression prefix gates:

$$ES_{b;j}\left(\chi_z^{(j)}\right) = v_z\left(\chi_z^{(j)}\right) \cdot ES_{b;j} \cdot v_z\left(-\chi_z^{(j)}\right)$$

$$ES_b(\chi_z) = \prod_{j=0,1} ES_{b;j}\left(\chi_z^{(j)}\right)$$

and a shorthand:

$$v_{z;1,2} = \prod_{j=0,1} v_z\left(-\chi_z^{(j)}\right)$$

algebraic manipulation provides:

$$MR_{ES}\hat{\mathcal{O}} = ES_a^{(mod)}ES_a^{-1}v_{z;1,2}\exp\left(-i\frac{\theta_{ZZ}}{2}ZZ\right)ES_b^{-1}(\chi_z)ES_b^{(mod)}\hat{\mathcal{O}}$$

Concluding the example, for a MR gate where first-order errors are suppressed, the prefix gates $ES_{b;j}$ and the suffix gates $ES_{a;j}$ may be replaced by:

$$ES_b^{(mod)} = ES_b(\chi_z)$$

$$ES_{a;j}^{(mod)} = v_{z;j}\left(\chi_z^{(j)}\right) ES_{a;j}$$

In a CR gate, the driving phase $\phi_1$ may affect the target qubit's transverse direction, as indicated hereinabove (i.e., the $gZX^{\phi_1}$ term in the evolution operator, defining the operation of an ideal CR gate, in the lab frame). Therefore, if a resonant rotary pulse may be applied on the target qubit, the driving phase of the resonant pulse $\phi_0$ may preferably be to equal the driving phase $\phi_1$ of the CR gate. Thus, when a $U_3$ gate may be included, the prefix gates $ES_{b;j}$ and/or the suffix gates $ES_{a;j}$ may be configured to compensate a residual Z-rotation phase of the $U_3$ gate. Deriving an expression for the prefix gates $ES_{b;j}$ and the suffix gates $ES_{a;j}$, the action of the CR gate may be rotated (via base shifting) to $ZZ$ for convenience: so that:

$$CR^{ZZ}(t,\phi_j) = \sqrt{X_1^{\frac{\pi}{2}+\phi_0}}\, CR(t,\phi_j)\sqrt{X_1^{-\frac{\pi}{2}+\phi_0}}$$

Thus:

$$CR^{ZZ}(t,\phi_j) = ES_a^{-1}\exp\left(-i\frac{\theta_{ZZ}}{2}ZZ\right)ES_b^{-1}$$

$$CR_{ES}\hat{O} = ES_a^{(mod)}CR(t,\phi_j)v_{z;1,2}\prod_{j=0,1}U_3\left(ES_{b;j}^{(mod)}\hat{O}_j\right)$$

$$= ES_a^{(mod)}\sqrt{X_1^{-\frac{\pi}{2}+\phi_0}}\, CR^{ZZ}(t,\phi_j)\sqrt{X_1^{\frac{\pi}{2}+\phi_0}}\, v_{z;1,2}\prod_{j=0,1}U_3\left(ES_{b;j}^{(mod)}\hat{O}_j\right)$$

$$= ES_a^{(mod)}\sqrt{X_1^{-\frac{\pi}{2}+\phi_0}}\, ES_a^{-1}v_{z;1,2}\exp\left(-i\frac{\theta_{ZZ}}{2}ZZ\right)ES_b^{-1}(\chi_z)\sqrt{X_1^{-\chi_z^{(1)}+\frac{\pi}{2}+\phi_0}}\, ES_b^{(mod)}\hat{O}$$

Concluding the example, for a CR gate where first-order errors are suppressed, the prefix gates $ES_{b;j}$ and the suffix gates $ES_{a;j}$ may be replaced by:

$$ES_b^{(mod)} = \sqrt{X_1^{-\chi_z^{(1)}-\frac{\pi}{2}+\phi_0}}\, ES_b(\chi_z)$$

$$ES_{a;j}^{(mod)} = v_{z;j}\left(\chi_z^{(j)}\right) ES_{a;j}\sqrt{X_1^{\frac{\pi}{2}+\phi_0}}$$

Preserving the virtual-Z phase of the $U_3$, after applying the method 200, may be required (e.g., in the examples hereinabove). Without loss of generality, the prefix gates $ES_{b;j}$ and the preceding gates $\hat{O}$ may be expressed as:

$$ES_b(\chi_z) = \prod_{j=0,1}\exp\left(-i\frac{\lambda_j}{2}X_j^{\varphi-\chi_z^j}\right)$$

$$\hat{O} = \prod_{j=0,1}\exp\left(-i\frac{\mu_j}{2}\left(Z_j\cos\alpha_j + X_j^{\beta_j}\sin\alpha_j\right)\right)$$

Finding values of $\chi_z^{(j)}$, that may be equal to the virtual-Z phases of the $U_3\left(ES_{b;j}\left(\chi_z^{(j)}\right)\hat{O}_j\right)$, may be required. The values of $\chi_z^{(j)}$ may be a solution of an implicit equation $\chi_z^{(j)} = \chi_z^{(j)}\left(\lambda_j, \mu_j, \alpha_j, \varphi_j - \beta_j\right)$. It is noted that this equation may have more than one solution.

The function $\chi_z^{(j)}\left(\lambda_j, \mu_j, \alpha_j, \varphi_j - \beta_j\right)$ may preferably have low sensitivity to values of the parameters $\lambda_j$, $\mu_j$, $\alpha_j$, $\varphi_j$ - $\beta_j$. In other words, magnitudes of partial derivatives of the function $\chi_z^{(j)}\left(\lambda_j, \mu_j, \alpha_j, \varphi_j - \beta_j\right)$ may preferably be lower than a predefined threshold. More preferably, the function $\chi_z^{(j)}\left(\lambda_j, \mu_j, \alpha_j, \varphi_j - \beta_j\right)$ may have a minimal sensitivity to values of the parameters $\lambda_j$, $\mu_j$, $\alpha_j$, $\varphi_j$ - $\beta_j$ (i.e., minimal magnitudes of partial derivatives).

The preference for low sensitivity of the function $\chi_z^{(j)}\left(\lambda_j, \mu_j, \alpha_j, \varphi_j - \beta_j\right)$ may be explained by the following observations. The values of the parameters $\lambda_j$, $\mu_j$, $\alpha_j$, $\varphi_j$ - $\beta_j$ may be known with a finite accuracy (e.g., resulting from a characterization of the prefix gates $ES_{b;j}$ and/or the preceding gates $\hat{\mathcal{O}}$ ).

Further, the implicit equation may be solved numerically. The values of the parameters may depend on the noise model of individual gates, and/or the exact circuit (which may affect the phase of the rotating noise, and/or the preceding gates $\hat{\mathcal{O}}$ ). Therefore, solving the implicit equation may be repeated, as a part of the compilation process, for many circuits (e.g., thousands of circuits). Thus, solving the implicit equation may be required to be performed quickly, in order for the compilation process to be not prohibitively slow.

It is noted that depending on the nature of the function $\chi_z^{(j)}\left(\lambda_j, \mu_j, \alpha_j, \varphi_j - \beta_j\right)$, the range for the parameters' values may be limited. For example, a range where very narrow extrema in the implicit equation may be present, may be excluded. This may occur when $|\mu_j \pm \lambda_j$ - $\pi| \ll 1$ (the inequality may be satisfied for at least one of the signs) and $||\alpha_j|$ - $\pi/2| \ll 1$. The sensitivity of the function $\chi_z^{(j)}\left(\lambda_j, \mu_j, \alpha_j, \varphi_j - \beta_j\right)$, for the values of the parameters $\lambda_j$, $\mu_j$, $\alpha_j$, may strongly depend on the value of the parameter $\alpha_j$ - $\beta_j$. I.e., a magnitude of a partial derivative (e.g., a first order derivative) with respect to any one of $\lambda_j$, $\mu_j$, $\alpha_j$, may be large for some values of $\varphi_j$ - $\beta_j$ (e.g., larger than a predefined threshold). The value of $\varphi_j$ may be controlled via the value of the phase(s) of the driving pulse(s) $\phi_j$. Generally, if $\mu_j \pm \lambda_j$ - $\pi \neq 0$ and $|\alpha_j|$ - $\pi/2 \neq 0$, a value of $\varphi_j$ can be found, so that the function $\chi_z^{(j)}\left(\lambda_j, \mu_j, \alpha_j, \varphi_j - \beta_j\right)$ may have low sensitivity. Thus, in some embodiments, the method **200** may include a step of computing a phase of at least one driving pulse, according to a target value of the parameter $\varphi_j$.

In some embodiments, the method **200** may be implemented as a native multi-pulse gate of the quantum-computer. The quantum computer may be instructed to apply a quantum gate *G*. A pulse generator of the quantum-computer may be provided with commands (e.g., by a controller of the quantum-computer), to apply a plurality of pulses to target qubits. The plurality of pulses may include pulses configured to apply the multi-qubit quantum logic operation *G*, thus performing step **220**. The plurality of pulses may further include pulses configured to apply the prefix gates $ES_{b;j}$ and/or suffix gates $ES_{a;j}$, thus performing step **210** and/or step **230**. The plurality of pulses may further include, in some embodiments, pulses configured to apply other gates, thus performing step **215** and/or step **225**. Timing information (e.g., the first accumulated time $t_1$ and the second accumulated time $t_2$) may be provided to the controller by a timing facility (e.g., a clock or a master-oscillator), that may be external to the controller or may be included in the controller.

*Rotating Dynamical Decoupling*

**Fig. 3A** shows a flowchart schematically illustrating an error suppression method **300** according to embodiments of the present disclosure. In the examples hereinabove, the *XX, YY, XY, YX* error terms of rotating implementation errors were neglected. These terms may be suppressed by method **300,** that may be referred to as "rotating dynamical decoupling" or "rotating DD".

Terms and notations defined in relation to method **200** (schematically illustrated in **Fig. 2A**) may be used in relation to method **300,** unless defined differently. It is noted that method **300** is independent of method **200.**

The method **300** may be implemented by a quantum computer. The method **300** may be for suppressing rotating implementation errors in a quantum circuit. In some embodiments, the rotating implementation errors may include diabatic errors.

The quantum circuit may include at least two occurrences of a multi-qubit quantum logic operation *G*, applied on a set of qubits of the quantum computer. A first occurrence of the quantum logic operation may be denoted $G_1$. A second occurrence of the quantum logic operation may be denoted $G_2$.

The method **300** may include a step **310** of applying (e.g., via a pulse generator of the quantum computer), for at least one qubit included in the set of qubits, a first dynamical decoupling gate $DD_1$ before the first occurrence of the quantum logic operation $G_1$.

The method **300** may include a step **320** of applying the first occurrence of the quantum logic operation $G_1$.

The method **300** may include a step **330** of applying (e.g., via a pulse generator of the quantum computer), for at least one qubit included in the set of qubits, a second dynamical decoupling gate $DD_2$ before the second occurrence of the quantum logic operation $G_2$.

The method **300** may include a step **320** of applying the second occurrence of the quantum logic operation $G_2$.

Generally, any one of the first dynamical decoupling gate $DD_1$ and the second dynamical decoupling gate $DD_2$, may have an action $\hat{X}\cos(\psi_1) - \hat{Y}\sin(\psi_1)$. The phase $\psi_1$ may be based on (i.e., may be a function of) a first accumulated time $t_1$ and a second accumulated time $t_2$. The first accumulated time $t_1$ may be associated with the first occurrence of the quantum logic operation $G_1$. The second accumulated time $t_2$ may be associated with the second occurrence of the quantum logic operation $G_2$. The accumulated times $t_{1,2}$ may be as described in relation to **Fig. 1.**

Exemplary parameters of the dynamical decoupling gates may be derived. For simplicity, a single-qubit gate may be presumed. However, the results will be the same for a multi-qubit gate, as may be explained hereinbelow. Without loss of generality, the derivation may be for an MR $ZZ$ gate.

When echoing a two-qubit gate with DD pulses, an enhanced error cancellation may be achieved by rotating the DD pulses' phases according to the rotating errors. In the time-independent frame (as defined herein above), a single-qubit gate g having a detuning $\Delta$ and a driving phase $\phi$, may have an evolution operator:

$$U_\Delta(\phi) = \exp\left(-it_g\left(\frac{\Delta}{2}Z + \frac{\epsilon}{2}X^\phi\right)\right)$$

Rotating the evolution operator from the time independent frame to the resonant frame gives:

$$U_{rot}(t) = \exp\left(-it\frac{\Delta}{2}Z\right)$$

$$U_\Delta^{res} = U_{rot}^\dagger(t + t_g)U_\Delta U_{rot}(t)$$

$$U_\Delta^{res} = \exp\left(it_g\frac{\Delta}{2}Z\right)\exp\left(-it_g\left(\frac{\Delta}{2}Z + \frac{\epsilon}{2}X^{\phi + \Delta \cdot t}\right)\right)$$

An echoed gate may be constructed by combining two applications of the single-qubit gate g, having a corresponding first accumulated time $t_1$ and a corresponding second accumulated time $t_2$, with resonant DD gates:

$$U_{echo} = X^{\psi_1} \cdot U_\Delta^{res}(t_2, \phi_2) \cdot X^{\psi_1} \cdot U_\Delta^{res}(t_1, \phi_1)$$

The accumulated times may be related by $t_2 = t_1 + t_g + t_x$, where $t_g$ may be a duration of applying the gate $g$, and where $t_x$ may be a duration of applying a DD gate. It is noted that the definition of $\phi$, may differ in relation to method **300,** from the definition in relation to method **200.**

Algebraic manipulation of the expression for $U_{echo}$ gives:

$$X^{\psi_1 - \Delta t_g}\exp\left(-it_g\left(\frac{\Delta}{2}Z + \frac{\epsilon}{2}X^{\phi_2 + \Delta(t_g + t_x)}\right)\right)X^{\psi_1 - \Delta t_g}\exp\left(-it_g\left(\frac{\Delta}{2}Z + \frac{\epsilon}{2}X^{\phi_1 + \Delta \cdot t_1}\right)\right)$$

Using the identities:

$$X^{\psi_1}\sigma_+ e^{i\alpha}X^{\psi_1} = \sigma_- e^{i(\alpha - 2\psi_1)}$$

$$X^{\psi_1} \cdot Z \cdot X^{\psi_1} = -Z$$

gives, after further algebraic manipulation:

$$U_{echo} = \exp\left(-it_g\left(-\frac{\Delta}{2}Z + \frac{\epsilon}{2}X^{2\psi_1 - \phi_2 - \Delta(t_1 + t_x + 2t_g)}\right)\right)\exp\left(-it_g\left(\frac{\Delta}{2}Z + \frac{\epsilon}{2}X^{\phi_1 + \Delta \cdot t_1}\right)\right)$$

Concluding the example, both $Z$ noise and transverse (rotating) $X^\alpha$ transverse noise may be compensated by rotating DD that may have an action $\hat{X}\cos(\psi_1)$ - $\hat{Y}\sin(\psi_1)$, when:

$$2\psi_1 = \Delta(2t_1 + 2t_g + t_x) + \phi_1 + \phi_2 + \pi$$

For a multi-qubit gate, for each qubit, a corresponding detuning and driving phase may be substituted in the equation, so as to obtain a corresponding DD phase $\psi_j$.

In some embodiments, the method **300** may include a step **350** of suppressing rotating errors on a neighboring qubit. A neighboring qubit, that is, a qubit not included in the set of qubits but communicating (i.e., interacting) with the set of qubits, may be subject to rotating implementation errors. Therefore, suppressing the rotating implementation errors, that the neighboring qubit may experience, may be desired.

The step **350** may include applying, via a pulse generator of the quantum computer, at least one dynamical decoupling gate $DD_0$. The at least one dynamical decoupling gate $DD_0$ may have an action $\hat{X}\cos(\psi_0)$ - $\hat{Y}\sin(\psi_0)$. The at least one dynamical decoupling gate $DD_0$ may be applied to the neighboring qubit (communicating with the set of qubits), so as to eliminate crosstalk between the set of qubits and the neighboring qubit.

The phase $\psi_0$ may be based on (i.e., may be a function of) a first accumulated time $t_1$ and a second accumulated time $t_2$. The first accumulated time $t_1$ may be associated with the first occurrence of the quantum logic operation $G_1$. The second accumulated time $t_2$ may be associated with the second occurrence of the quantum logic operation $G_2$.

In some embodiments, the at least one dynamical decoupling gate $DD_0$ may temporally overlap one of the occurrences of the logic operation $G$. That is, for at least one time point, the process of applying the at least one dynamical decoupling gate $DD_0$, and the process of applying one of the occurrences of the logic operation $G$, may both be performed. In some embodiments, application of the at least one dynamical decoupling gate $DD_0$ may begin before finishing the application of the second occurrence of the quantum logic operation $G_2$. In some embodiments, application of the at least one dynamical decoupling gate $DD_0$ may begin after beginning the application of the first occurrence of the quantum logic operation $G_1$.

An exemplary expression for $\psi_0$ may be derived hereinbelow. For brevity, numerical indexes may index qubits and not occurrence of the quantum logic operation, except the accumulated times $t_{1,2}$. The neighboring qubit may be denoted by the index 0. Without loss of generality, the quantum logic operation $G$ may be a two-qubit gate. The two qubits included in the set of qubits may be indexed by 1, and 2. The neighboring qubit may be assumed to communicate with qubit 1. Without loss of generality, the derivation may be for an MR $ZZ$ gate.

In the time-independent reference frame, the Hamiltonian may include crosstalk terms of the form:

$$H_{TID}(\phi) = \frac{\Delta_0}{2}Z_0 + \epsilon_g X_0^{\phi_q}Z_1 + \cdots = \frac{\Delta_0}{2}Z_0 + \epsilon_g(X_0 Z_1\cos\phi_1 - Y_0 Z_1\sin\phi_1) + \cdots$$

where $\Delta_0 = \omega_{0,0} - \theta(\omega_{0,0})\omega_{d,1}$ may denote a detuning of the neighboring qubit from the driving frequency of a pulse applied on qubit 1. For brevity, terms relating to the action of the quantum logic operation $G$ inside the set of qubits, are not shown the expression for the Hamiltonian. In the resonant frame, the evolution operator may be:

$$U^{res} = \exp\left(i\sum_{j=0}^{2}\frac{\Delta_j}{2}Z_j(t_1 + t_g)\right) \cdot e^{-iH_{TID}(\phi)t_g} \cdot \exp\left(-i\sum_{j=0}^{2}\frac{\Delta_j}{2}Z_j t_1\right)$$

The crosstalk terms may thus rotate by $\frac{1}{2}\Delta_0 t_1$ .

The derivation hereinabove for this example is for a single application of the quantum logic operation $G$ (e.g., the first occurrence). Indexes 1, 2 may now index occurrences of the quantum logic operation $G$, the index $q$ may index the qubit (included in the set of qubits) that communicates with the neighboring qubit. Combining the rotations of the two occurrences of the quantum logic operation $G_{1,2}$, and the phase due to the dynamical decoupling applied to the set of

qubits, results:

$$2\psi_0 = \Delta_0\big(2t_1 + 2t_g + t_x\big) + \phi_1^q + \phi_2^q$$

The expression for $\psi_0$ may be similar to the expression for $\psi_1$, except for absence of an additional $\pi$ phase. The difference arises due to the desired result of the dynamical decoupling. For the neighboring qubit, the desired result is elimination of crosstalk. For qubit $q$, the desired result is a $Z$ gate, that requires the additional a $\pi$ phase.

Generally, method **200** may be combined with method **300**. For example, for a first occurrence of the quantum logic operation $G$, prefix gates $ES_{b;j}$ and suffix gates $ES_{a;j}$ may be applied, so as to suppress any one of: *IX, IY, IZ, XI, YI, ZI, XZ, YZ, ZX, ZY* Pauli error terms. Preferably, in some embodiments, for both occurrences of the quantum logic operation $G_{1,2}$, prefix gates $ES_{b;j}$ and suffix gates $ES_{a;j}$ may be applied. Further, rotating dynamical decoupling may be applied, so as to suppress any one of: *XY, YX* Pauli error terms.

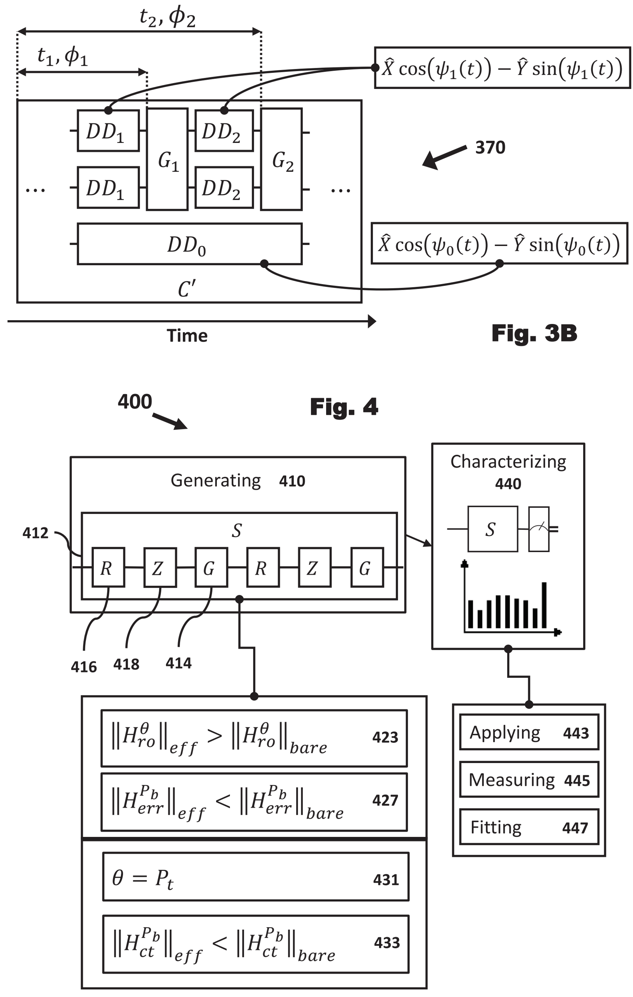

**Fig. 3B** illustrates an exemplary quantum circuit **370** implementing the method **300,** where the step **350** is included. The quantum circuit **370** includes two occurrences of the quantum logic operation $G$. The quantum logic operation $G$ is a two-qubit gate. A first dynamical decoupling gate $DD_1$ and a second dynamical decoupling gate $DD_2$ are applied on each of the two qubits. The two qubits that the quantum logic operation $G$ operates upon are communicating with a third, neighboring qubit. A third dynamical decoupling gate $DD_0$ is applied on the neighboring qubit.

It is noted that the step **350** may be independent of steps **310 330**. In other words, any one of steps **310 330** may be omitted and/or be replaced with an arbitrary quantum operation.

In yet other words, the method **300** may be generalized as follows. A quantum-computer implemented method for suppressing rotating implementation errors in a quantum circuit. The method may be implemented by a quantum computer. The method may be for suppressing rotating implementation errors in a quantum circuit. In some embodiments, the rotating implementation errors may include diabatic errors.

The quantum circuit may include at least two occurrences of a multi-qubit quantum logic operation $G$, applied on a set of qubits of the quantum computer. A first occurrence of the quantum logic operation may be denoted $G_1$. A second occurrence of the quantum logic operation may be denoted $G_2$.

The method may include a step of applying the first occurrence of the quantum logic operation $G_1$. The method may include a step of applying the second occurrence of the quantum logic operation $G_2$.

The method may include applying, via a pulse generator of the quantum computer, at least one dynamical decoupling gate $DD_0$. The at least one dynamical decoupling gate $DD_0$ may have an action $\hat{X}\cos(\psi_0)$ - $\hat{Y}\sin(\psi_0)$. The at least one dynamical decoupling gate $DD_0$ may be applied to the neighboring qubit (communicating with the set of qubits), so as to eliminate crosstalk between the set of qubits and the neighboring qubit. The phase $\psi_0$ may be based on (i.e., may be a function of) a first accumulated time $t_1$ and a second accumulated time $t_2$. The first accumulated time $t_1$ may be associated with the first occurrence of the quantum logic operation $G_1$. The second accumulated time $t_2$ may be associated with the second occurrence of the quantum logic operation $G_2$.

In some embodiments, the at least one dynamical decoupling gate $DD_0$ may temporally overlap one of the occurrences of the logic operation G. That is, for at least one time point, the process of applying the at least one dynamical decoupling gate $DD_0$, and the process of applying one of the occurrences of the logic operation $G$, may both be performed. In some embodiments, application of the at least one dynamical decoupling gate $DD_0$ may begin before finishing the application of the second occurrence of the quantum logic operation $G_2$. In some embodiments, application of the at least one dynamical decoupling gate $DD_0$ may begin after beginning the application of the first occurrence of the quantum logic operation $G_1$.

In some embodiments, the method **300** may be performed o implement an echoed gate $\mathcal{C} = G^2$. In other words, the at least two occurrences of a multi-qubit quantum logic operation $G$ may be configured to implement an echoed gate $C = G^2$. In yet other words, a quantum gate $C$ may be implemented by applying twice a quantum gate $\sqrt{\mathcal{C}}$, according to method **300**.

In some embodiments, the method **300** may be implemented as a native multi-pulse gate of the quantum-computer. The quantum computer may be instructed to apply a quantum gate $C$. A pulse generator of the quantum-computer may be provided with commands (e.g., by a controller of the quantum-computer), to apply a plurality of pulses to target qubits. The plurality of pulses may include pulses configured to apply the at least two occurrences of a multi-qubit quantum logic operation $G$ (i.e., $G_1$ and $G_2$), where $G = \sqrt{\mathcal{C}}$, thus performing steps **320 340**. The plurality of pulses may further include pulses configured to apply the first and second dynamical decoupling gates (i.e., $DD_1$ and $DD_2$), thus performing steps **310 330**. In conjunction or instead of the first and second dynamical decoupling gates $DD_{1,2}$, the plurality of pulses may further include pulses configured to apply on a neighboring qubit the at least one dynamical decoupling gate $DD_0$, thus performing step **350**. Timing information (e.g., the first accumulated time $t_1$ and the second accumulated time $t_2$)

may be provided to the controller by a timing facility (e.g., a clock or a master-oscillator), that may be external to the controller or may be included in the controller.

*Characterization of rotating errors*

Generally, in order to characterize rotating implementation errors, characterization protocols may require adaptation to the non-Markovian nature of the rotating implementation errors. Generally, it may be preferable to isolate the rotating implementation errors from other errors. In other words, characterization sequences that may be sensitive only to rotating implementation errors may be desired.

**Fig. 4** shows a flowchart illustrating a broad aspect of a computer implemented method **400** for characterizing at least one target error parameter of rotating implementation errors in a quantum logic operation $G$ **414,** according to embodiments of the present disclosure. The method **400** may be implemented by a quantum computer. The quantum logic operation $G$ **414** may be a multi-qubit quantum logic operation. The quantum logic operation $G$ **414** may act (i.e., operate, be applied on) a set of qubits of the quantum computer. In some embodiments, the quantum logic operation $G$ **414** may be a two-qubit quantum gate.

The quantum logic operation $G$ **414** may be expressed according to a generator, i.e., a Hamiltonian $H$. The Hamiltonian $H$ may include terms for rotating implementation errors $H_{ro}$, and terms for other types of errors $H_{err}$. The terms for rotating implementation errors $H_{ro}$ may include rotating crosstalk implementation errors $H_{roct}$. The terms for other types of errors $H_{err}$ may include terms for crosstalk implementation errors $H_{ct}$ distinct from the rotating crosstalk implementation errors $H_{roct}$. In some embodiments, the rotating implementation errors may be diabatic errors.

The rotating implementation errors may be quantified by an at least one error parameter. In other words, the rotating implementation errors may be modelled by a model that may include at least one error parameter. The at least one target error parameter may be denoted $\theta$.

In some embodiments, the at least one target error parameter $\theta$ may be a Pauli generator term $P_t$ **431.** That is, expanding $H_{ro}$ as a sum of Pauli terms, the error parameter may be a coefficient $c_t$ corresponding a Pauli term $P_t$ of $H_{ro}$. In some embodiments, where the quantum logic operation $G$ **414** may be a two-qubit gate, the rotating implementation errors may include any one of: *IX, IY, IZ, XI, YI, ZI, XZ, YZ, ZX, ZY* Pauli error terms.

The method **400** may include a step of generating at least one characterization sequence $S$ **410.** The at least one characterization sequence $S$ **412** may include at least one instance of the quantum logic operation $G$ **414.** The at least one characterization sequence $S$ **412** may be configured for amplifying the at least one target error parameter $\theta$ **423.** In other words, the at least one characterization sequence $S$ **412** may be configured for acting on the targeted set of qubits, so as to have rotating implementation errors that relate to the at least one target error parameter $\theta$, that are greater than the rotating implementation errors of the quantum logic operation $G$ **414.** For example, the at least one characterization sequence $S$ **412** may include a plurality of copies of the quantum logic operation $G$ **414,** so as to accumulate rotating implementation errors. In some embodiments, $H_{ro}$ may have an effective value, when the quantum logic operation $G$ **414** is included in at least one characterization sequence $S$ **412.** The effective value may be different from the bare value (i.e., when the quantum logic operation $G$ **414** is applied alone). At least one term (e.g., a Pauli term) of the effective $H_{ro}$, that may relate to the at least one target error parameter $\theta$, may have a greater value than the corresponding term of the bare $H_{ro}$.

The at least one characterization sequence $S$ **412** may include at least one refocusing sequence $R$ **416.** Generally, a refocusing sequence may be defined as a sequence of quantum operations that may be configured for controllably amplifying a first set of implementation errors, while concurrently, attenuating a second set of implementation errors. For example, a dynamical decoupling sequence.

The at least one refocusing sequence $R$ **416** may be configured so that the at least one characterization sequence $S$ **412** may reduce predefined error generator terms $P_b$ **427** of the other types of errors $H_{err}$. That is, predefined terms of $H_{err}$ may have an effective value less than the bare value. In other words, the at least one refocusing sequence $R$ **416** may be configured so predefined terms (e.g., Pauli terms) of $H_{err}$ may have an effective value less than the bare value. The predefined terms of $H_{err}$, that may have an effective value less than the bare value, may be distinct from the at least one term of the effective $H_{ro}$, that may relate to the at least one target error parameter $\theta$.

The predefined error generator terms $P_b$ **427** may include terms of non-rotating crosstalk errors $H_{ct}$ between the targeted set of qubits and another set of qubits of the quantum processor. In some embodiments, an effective value of non-rotating crosstalk errors $H_{ct}$ may be less than the corresponding bare value **433.**

In some embodiments, the at least one characterization sequence $S$ **412** may be configured to eliminate predefined Pauli generator terms of the implementation errors distinct from the at least one target error parameter (the Pauli generator term $P_t$ **431**). In other words, the effective value of the predefined Pauli generator terms $P_b$ **427** may be less than a predefined threshold. Therefore, the effective value of the predefined Pauli generator terms of the implementation errors may be equivalent to zero. For example, a first-order error may vanish.

In some embodiments, the at least one characterization sequence $S$ **412** may be configured for characterization of a plurality of error parameters. For example, the at least error parameter $\theta$ may include a plurality of Pauli terms $P_t^{(i)}$. The at least one characterization sequence $S$ **412** may be configured for characterization of at least two Pauli terms $P_t^{(1)}, P_t^{(2)}$. The plurality of Pauli terms $P_t^{(i)}$ may relate to a single rotating implementation error, or may relate to a plurality of rotating implementation errors. In other embodiments, the at least one characterization sequence $S$ **412** may be configured for characterization of a single error parameter. E.g., the at least one characterization sequence $S$ **412** may be configured to amplify one Pauli term $P_t$ of $H_{ro}$, and configured to eliminate any other Pauli terms $P_b$ **427** distinct from the one Pauli term $P_t$, whether of the other types of errors $H_{err}$ or of the rotating implementation errors $H_{ro}$.

The at least one characterization sequence $S$ **412** may include single-qubit rotations **418** so as to set an at least one cumulative rotation phase $\zeta$, associated with the at least one occurrence quantum logic operation $G$ **414,** to a predefined value. In some embodiments, the single-qubit rotations **418** may include $Z$ rotations. In some embodiments, the $Z$ rotations may include virtual-$Z$ rotations.

The method **400** may include a step of characterizing the at least one target error parameter $\theta$ **440.** Characterizing the at least one target error parameter $\theta$ **440** may be performed using the at least one characterization sequence $S$ **412** in a characterization protocol. Examples of characterization protocols include, but are not limited to: gate set tomography (GST), Hamiltonian tomography, state tomography, and process tomography.

The step of characterizing the at least one target error parameter $\theta$ **440** may include applying the at least one characterization sequence $S$ to the quantum processor **443.** The step of characterizing the at least one target error parameter $\theta$ **440** may include measuring the targeted set of qubits using a measurement apparatus of the quantum processor, thereby obtaining a set of measurement values **445.** The step of characterizing the at least one target error parameter $\theta$ **440** may include computing a value of the at least one target error parameter $\theta$, by fitting a model to the set of measurement values **447.**

In some embodiments, the quantum logic operation $G$ may be implemented according to a corresponding KAK decomposition. Implementation according to a KAK decomposition is described hereinabove in relation to method **200.**

The characterization method **400** may be combined with any one of the error suppression methods **200 300.** In other words, an error suppression method may include characterizing rotating implementation errors of a quantum logic operation G by a method as described hereinabove (e.g., method **400**)**,** thereby obtaining characterization of the rotating implementation errors. The error suppression method may include executing at least one quantum circuit that may include at least one occurrence of a quantum logic operation $G$, according to the characterization of the rotating errors, and according to an error suppression method as described hereinabove (e.g., methods **200 300** or a combination thereof). In other words, the at least one quantum circuit may be executed according to the characterization of the rotating errors, so as to implement an error suppression method as described hereinabove. For example, the at least one quantum circuit may include prefix gates and suffix gates associated with the at least one occurrence of a quantum logic operation $G$. Parameters of the at least one quantum circuit (e.g., rotation angles of the prefix gates and suffix gates) may be according to the characterization of the rotating errors.

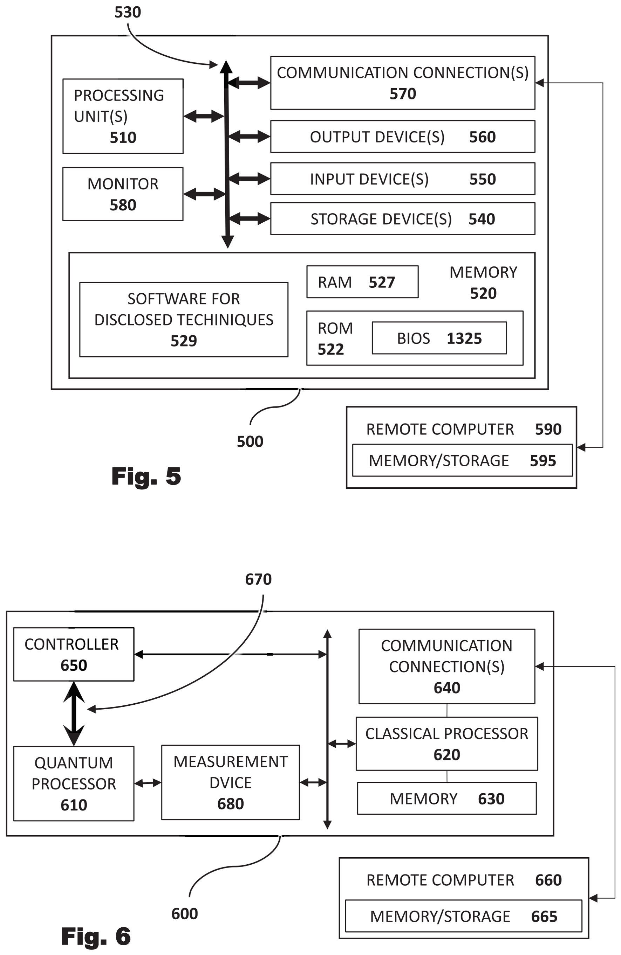

**Fig. 5** and the following discussion are intended to provide a brief, general description of an exemplary computing environment in which the disclosed technology may be implemented. Although not required, the disclosed technology is described in the general context of computer executable instructions, such as program modules, being executed by a personal computer (PC). Generally, program modules include routines, programs, objects, components, data structures, etc., that perform particular tasks or implement particular abstract data types. Moreover, the disclosed technology may be implemented with other computer system configurations, including handheld devices, multiprocessor systems, microprocessor-based or programmable consumer electronics, network PCs, minicomputers, mainframe computers, and the like. The disclosed technology may also be practiced in distributed computing environments where tasks are performed by remote processing devices that are linked through a communications network. In a distributed computing environment, program modules may be located in both local and remote memory storage devices.

With reference to **Fig. 5,** an exemplary system for implementing the disclosed technology includes a general purpose (classical) computing device in the form of an exemplary conventional PC **500,** including one or more processing units **510,** a system memory **520,** and a system bus **530** that couples various system components including the system memory **520** to the one or more processing units **510.** The system bus **530** may be any of several types of bus structures including a memory bus or memory controller, a peripheral bus, and/or a local bus using any of a variety of bus architectures. The exemplary system memory **520** includes read only memory (ROM) **522** and random-access memory (RAM) **527.** A basic input/output system (BIOS) **525,** containing the basic routines that help with the transfer of information between elements within the PC **500,** is stored in ROM **522.** As shown in **Fig. 5,** the system memory **520** may store computer-executable instructions for performing any of the disclosed techniques (e.g., sending instructions to quantum computer for applying characterization gate sequences and neighboring gate sequences to a subset of qubits, measuring outcomes, collecting frequencies, computing model parameters) in respective memory portions (shown generally as executable software **529** for performing any embodiment of the disclosed synthesis techniques).

The exemplary PC **500** further includes one or more storage devices **540,** such as a hard disk drive for reading from and writing to a hard disk, a magnetic disk drive for reading from or writing to a removable magnetic disk, and/or an optical disk drive for reading from or writing to a removable optical disk (such as a CD-ROM or other optical media). Such storage devices can be connected to the system bus **530** by a hard disk drive interface, a magnetic disk drive interface, and/or an optical drive interface, respectively. The drives and their associated computer readable media provide nonvolatile storage of computer-readable instructions, data structures, program modules, and other data for the PC **500.** Other types of computer-readable media which can store data that is accessible by a PC, such as magnetic cassettes, flash memory, digital video disks, CDs, DVDs, RAMs, NVRAMs, ROMs, and the like, may also be used in the exemplary operating environment. As used herein, the terms storage, memory, and computer-readable media may not include or encompass propagating carrier waves or signals per se.

A number of program modules may be stored in the storage devices **540,** including an operating system, one or more application programs, other program modules, and program data. Storage of results of quantum measurements and instructions for obtaining such measurements (and/or instructions for performing any embodiment of the disclosed technology) can be stored in the storage devices **540.** A user may enter commands and information into the PC **500** through one or more input devices **550** such as a keyboard and a pointing device such as a mouse. Other input devices may include a digital camera, microphone, joystick, game pad, satellite dish, scanner, or the like. These and other input devices are often connected to the one or more processing units **510** through a serial port interface that is coupled to the system bus **530,** but may be connected by other interfaces such as a parallel port, game port, or universal serial bus (USB). A monitor **580** or other type of display device is also connected to the system bus **530** via an interface, such as a video adapter. Other peripheral output devices **560,** such as speakers and printers (not shown), may be included. In some cases, a user interface is displayed so that a user can input a circuit for synthesis, and verify successful synthesis.

The PC **500** may operate in a networked environment using logical connections to one or more remote computers, such as a remote computer **590.** In some examples, one or more network or communication connections **570** are included. The remote computer **590** may be another PC, a server, a router, a network PC, or a peer device or other common network node, and typically includes many or all of the elements described above relative to the PC **500,** although only a memory storage device **595** has been illustrated in **Fig. 5.** The personal computer **500** and/or the remote computer **590** can be connected to a local area network (LAN) and a wide area network (WAN). Such networking environments are commonplace in offices, enterprise-wide computer networks, intranets, and the Internet.

When used in a LAN networking environment, the PC **500** is connected to the LAN through a network interface. When used in a WAN networking environment, the PC **500** typically includes a modem or other means for establishing communications over the WAN, such as the Internet. In a networked environment, program modules depicted relative to the personal computer **500,** or portions thereof, may be stored in the remote memory storage device or other locations on the LAN or WAN. The network connections shown are exemplary, and other means of establishing a communications link between the computers may be used.

With reference to **Fig. 6,** an exemplary system for implementing the disclosed technology includes computing environment **600.** The environment includes one or more quantum processing unit(s) **610** including one or more monitoring/measuring device(s). The quantum processing unit(s) execute quantum circuits that are provided by a classical processing unit **620.** The quantum circuits are downloaded into or used to program or configure the quantum processing unit(s) **610** (e.g., via control lines (quantum bus) **670**). Procedures according to any of the disclosed embodiments (e.g., a high-level description of the set of quantum circuits to be applied to a qubit patch and neighboring qubits) may be stored in a memory **630.**

The high-level description of a quantum software may be translated into quantum circuits (e.g., sequences of quantum gates, or layers of gates acting in parallel on different qubits). Such high-level descriptions may be stored, as the case may be, on one or more external computers **660** outside the computing environment **600** utilizing one or more memory and/or storage device(s) **665,** then downloaded as necessary into the computing environment **600** via one or more communication connection(s) **640.** Quantum circuits (according to any of the disclosed embodiments) may be coupled to the quantum processor **610.**

The quantum processing unit(s) can be one or more of, but are not limited to: (a) a superconducting quantum computer; (b) an ion trap quantum computer; (c) a topological quantum computer using e.g., Majorana zero modes; (d) a photonic quantum computer; or (e) a neutral atom quantum computer. The sets of gates (e.g., using any of the disclosed embodiments) can be sent into (or otherwise applied to) the quantum processing unit(s) via control lines **670** at a controller **650.** The desired quantum computing process may be implemented with the aid of one or more controllers **650** that are specially adapted to control a corresponding one of the quantum processor(s) **610.** The classical processor **620** can further interact with measuring/monitoring devices (e.g., readout devices) **680** to help control and implement the desired quantum computing process (e.g., by reading or measuring out data results from the quantum processing units once available, etc.).

Having described and illustrated the principles of the disclosed technology with reference to the illustrated embodiments, it will be recognized that the illustrated embodiments can be modified in arrangement and detail without departing from such principles. The particular arrangements above are provided for convenient illustration, and other arrangements can be used. For instance, elements of the illustrated embodiments shown in software may be implemented in hardware and vice-versa; Technologies from any example can be combined with the technologies described in any one or more of the other examples; Procedures and functions such as those described with reference to the illustrated examples can be implemented in a single hardware or software module, or separate modules can be provided.

Therefore, casting into a language of clauses, the present disclosure provides methods, systems and circuits according to, but not limited to, the following clauses:

Clause 1: A quantum-computer implemented method for suppressing rotating implementation errors in a quantum circuit comprising at least one occurrence of a multi-qubit quantum logic operation $G$ applied on a set of qubits of the quantum computer, the method comprising, for each qubit included in said set of qubits, applying via a pulse generator of the quantum computer, at least one of:

  a. a corresponding single-qubit prefix gate, before applying said at least one occurrence of said quantum logic operation $G$; or,
  b. a corresponding single-qubit suffix gate, after applying said at least one occurrence of said quantum logic operation $G$;

wherein coefficients of Pauli terms, of any one of said prefix gate and said suffix gate, are based on an accumulated time from a beginning of said quantum circuit, said accumulated time being associated with said at least one occurrence of said quantum logic operation $G$.

Clause 2: The method according to clause 1, wherein said rotating implementation errors are diabatic errors.

Clause 3: The method according to any one of clauses 1 to 2, comprising applying said prefix gate and said suffix gate.

Clause 4: The method according to any one of clauses 1 to 3, comprising applying any one of said prefix gate and said suffix gate adjacently to said quantum logic operation $G$.

Clause 5: The method according to any one of clauses 1 to 4 wherein coefficients of Pauli terms, of any one of said prefix gate and said suffix gate, are based on at least one cumulative rotation phase $\zeta$ being based on said accumulated time.

Clause 6: The method according to clause 5, wherein said at least one cumulative rotation phase $\zeta$ includes, for at each qubit $j$ included in said set of qubits, an associated effective phase $\phi_j^{eff}$.

Clause 7: The method according to clause 6, wherein said associated effective phase being $\phi_j^{eff} = \phi_j + \Delta_j t$, wherein:

  a. $\phi_j$ being a phase of a driving pulse applied on a corresponding $j$'th qubit included in said set of qubits, said driving pulse being associated with said at least one occurrence of said quantum logic operation $G$;
  b. $\Delta_j$ being a detuning of said driving pulse; and,
  c. $t$ being said accumulated time from a beginning of said quantum circuit.

Clause 8: The method according to any one of clauses 1 to 7, wherein said quantum logic operation $G$ is a two-qubit quantum gate.

Clause 9: The method according to clause 8, wherein said quantum logic operation $G$ is a $ZZ$ gate.

Clause 10: The method according to clause 9, wherein said rotating implementation errors include any one of: $IX, IY, IZ, XI, YI, ZI, XZ, YZ, ZX, ZY$ Pauli error terms.

Clause 11: The method according to any one of clauses 8 to 10, wherein said quantum logic operation $G$ is implemented according to an associated KAK decomposition.

Clause 12: The method according to clause 11, wherein implementation of any one of $XX$ rotation and $YY$ rotation comprises:

  a. shifting a basis of said at least one qubit from a measurement basis to a rotation basis;
  b. applying a $ZZ$-rotation quantum gate;
  c. shifting back a basis of said at least one qubit from said rotation basis to said measurement basis.

Clause 13: The method according to any one of clauses 1 to 12, wherein said quantum logic operation $G$ is a microwave-driven quantum gate.

Clause 14: The method according to clause 13, as dependent on any one of clauses 8 to 12, wherein said quantum logic operation $G$ is any one of: a Cross-Resonance quantum gate, a Cross-Cross-Resonance quantum gate, and a Mid-Resonance quantum gate.

Clause 15: The method according to any one of clauses 1 to 14, wherein said quantum logic operation $G$ is a flux gate.

Clause 16: The method according to any one of clauses 1 to 15, wherein any one of said prefix gate and said suffix gate are configured to eliminate high order errors included in said rotating implementation errors.

Clause 17: The method according to any one of clauses 1 to 16, wherein any one of said prefix gate and said suffix gate are based on a characterization of said quantum logic operation $G$.

Clause 18: The method according to any one of clauses 1 to 17, wherein any one of said prefix gate and said suffix gate includes at least one $U_3$ quantum gate.

Clause 19: The method according to clauses 1 to 18, comprising application of virtual-$Z$ gates.

Clause 20: A quantum-computer implemented method for suppressing rotating implementation errors in a quantum circuit comprising at least two occurrences of a multi-qubit quantum logic operation $G$ applied on a set of qubits of the quantum computer, the method comprising, for at least one qubit included in said set of qubits, applying via a pulse generator of the quantum computer:

> a. a first dynamical decoupling gate $DD_1$ before a first occurrence of said quantum logic operation $G_1$; and
> b. a second dynamical decoupling gate $DD_2$ after said first occurrence of said quantum logic operation $G_1$ and before a second occurrence of said quantum logic operation $G_2$;

wherein said first dynamical decoupling gate $DD_1$ and said a second dynamical decoupling gate $DD_2$ having an action $\hat{X} \cos(\psi_1) - \hat{Y} \sin(\psi_1)$, said $\psi_1$ based on:

> i. a first accumulated time $t_1$ associated with said first occurrence of said quantum logic operation $G_1$; and
> ii. a second accumulated time $t_2$ associated with said second occurrence of said quantum logic operation $G_2$.

Clause 21: A quantum-computer implemented method for suppressing rotating implementation errors in a quantum circuit comprising at least two occurrences of a multi-qubit quantum logic operation $G$ applied on a set of qubits of the quantum computer, the method comprising applying, via a pulse generator of the quantum computer, at least one dynamical decoupling gate $DD_0$ having an action $\hat{X} \cos(\psi_0) - \hat{Y} \sin(\psi_0)$ to a neighboring qubit communicating with said set of qubits so as to eliminate crosstalk between said set of qubits and said neighboring qubit, wherein said at least one dynamical decoupling gate $DD_0$ temporally overlaps said logic operation $G$, wherein said $\psi_0$ based on:

> i. a first accumulated time $t_1$ associated with said first occurrence of said quantum logic operation $G_1$; and
> ii. a second accumulated time $t_2$ associated with said second occurrence of said quantum logic operation $G_2$.

Clause 22: A quantum-computer implemented method for suppressing rotating implementation errors in a quantum circuit comprising at least two occurrences of a multi-qubit quantum logic operation $G$ applied on a set of qubits of the quantum computer, said set of qubits communicating with a neighboring qubit, the method comprising applying the method according to clause 20 to said set of qubits, and applying the method according to clause 21 to said neighboring qubit.

Clause 23: The method according to any one of clauses 20 to 22, wherein said at least two occurrences of a multi-qubit quantum logic operation $G$ are configured to implement an echoed gate $C = G^2$.

Clause 24: The method according to clause 23, implemented as a native multi-pulse gate of said quantum-computer.

Clause 25: A quantum-computer implemented method for characterizing at least one target error parameter of rotating implementation errors in a multi-qubit quantum logic operation $G$ acting on a set of qubits of the quantum computer, the method comprising:

> a. generating at least one characterization sequence $S$ comprising at least one occurrence of said quantum logic operation $G$, wherein:
>
> > i. said at least one characterization sequence $S$ is configured for amplifying said at least one target error parameter;
> > ii. said least one characterization sequence $S$ comprises at least one refocusing sequence, wherein the at least one refocusing sequence is configured so that the characterization sequence reduces predefined generator terms including crosstalk between said set of qubits and another set of qubits of the quantum-computer;
> > iii. said at least one characterization sequence $S$ comprises single-qubit rotations so as to set an at least one cumulative rotation phase $\zeta$, associated with said at least one occurrence quantum logic operation $G$, to a predefined value;

b. characterizing said at least one target error parameter using said at least one characterization sequence in a characterization protocol.

Clause 26: The method according to clause 25, wherein characterizing the at least one target error parameter comprises:

a. applying the at least one characterization sequence $S$ to said set of qubits via a pulse generator of the quantum computer;
b. measuring said set of qubits using a measurement apparatus of said quantum processor, thereby obtaining a set of measurement values;
c. computing a value of said at least one target error parameter, by fitting a model to said set of measurement values.

Clause 27: The method according to any one of clauses 25 to 26, wherein said single-qubit rotations comprise $Z$ rotations.
Clause 28: The method according to clause 27, wherein said $Z$ rotations comprise virtual-$Z$ rotations.
Clause 29: The method according to any one of clauses 25 to 28, wherein said rotating implementation errors are diabatic errors.
Clause 30: The method according to any one of clauses 25 to 29, wherein said quantum logic operation $G$ is a two-qubit quantum gate.
Clause 31: The method according to clause 30, wherein said rotating implementation errors include any one of: *IX, IY, IZ, XI, YI, ZI, XZ, YZ, ZX, ZY* Pauli error terms.
Clause 32: The method according to any one of clauses 30 to 31, wherein said quantum logic operation $G$ is implemented according to a corresponding KAK decomposition.
Clause 33: A quantum-computer implemented method for suppressing rotating implementation errors in a quantum circuit comprising at least one occurrence of a quantum logic operation $G$ applied on a set of qubits of a quantum processor, the method comprising:

a. characterizing rotating implementation errors of said quantum logic operation $G$ by a method according to any one of clauses 25 to 32, thereby obtaining characterization of said rotating implementation errors;
b. executing at least one quantum circuit comprising at least one occurrence of a quantum logic operation $G$, according to said characterization of the rotating errors and according to a method according to any one of clauses 1 to 24.

Clause 34: A quantum processing unit, comprising:

a. at least two qubits;
b. at least one pulse generator coupled to said at least two qubits, so as to apply pulses to said at least two qubits; and
c. a controller communicating with said at least one pulse generator, so as to provide commands to said at least one pulse generator;

said quantum processing unit being configured to implement the method according to any one of the clauses 1 to 33.
Clause 35: The quantum processing unit according to clause 34, wherein said at least one pulse generator is configured to apply radiofrequency pulses.
Clause 36: The quantum processing unit according to clause 35, wherein said two qubits are superconducting qubits.
Clause 37: The quantum processing unit according to clause 34, wherein said at least one pulse generator is configured to apply any one of: infrared pulses, visible light pulses, and ultraviolet pulses.
Clause 38: A system comprising a computer and a quantum processing unit, the computer having a pulse-level access to the quantum processing unit, the system being configured to implement the method according to any one of the clauses 1 to 33.
Clause 39: The system according to clause 38, wherein said quantum processing unit being according to any one of clauses 34 to 37.
Clause 40: A non-transient computer readable storage medium, storing computer instructions, wherein the computer instructions are used for causing a computer communicating with a quantum processing unit, to implement the method according to any one of the clauses 1 to 33.
Clause 41: A computer implemented method, the method includes simulating the method according to any one of clauses 1 to 33.

Clause 42: A non-transient computer readable storage medium, storing computer instructions, wherein the computer instructions are used for causing a computer to perform the method according to clause 41.

**Claims**

1. A quantum-computer implemented method for suppressing rotating implementation errors in a quantum circuit comprising at least one occurrence of a multi-qubit quantum logic operation $G$ applied on a set of qubits of the quantum computer, the method comprising, for each qubit included in said set of qubits, applying via a pulse generator of the quantum computer, at least one of:

   **(a)** a corresponding single-qubit prefix gate, before applying said at least one occurrence of said quantum logic operation $G$; and,
   **(b)** a corresponding single-qubit suffix gate, after applying said at least one occurrence of said quantum logic operation $G$;

   wherein coefficients of Pauli terms, of any one of said prefix gate and said suffix gate, are based on an accumulated time from a beginning of said quantum circuit, said accumulated time being associated with said at least one occurrence of said quantum logic operation $G$.

2. The method according to claim 1, wherein said rotating implementation errors are diabatic errors.

3. The method according to any one of claims 1 to 2, comprising applying said prefix gate and said suffix gate.

4. The method according to any one of claims 1 to 3, comprising applying any one of said prefix gate and said suffix gate adjacently to said quantum logic operation $G$.

5. The method according to any one of claims 1 to 4 wherein coefficients of Pauli terms, of any one of said prefix gate and said suffix gate, are based on at least one cumulative rotation phase $\zeta$ being based on said accumulated time.

6. The method according to claim 5, wherein said at least one cumulative rotation phase $\zeta$ includes, for at each qubit j included in said set of qubits, an associated effective phase $\phi_j^{eff}$.

7. The method according to claim 6, wherein said associated effective phase being $\phi_j^{eff} = \phi_j + \Delta_j t$, wherein:

   **(a)** $\phi_j$ being a phase of a driving pulse applied on a corresponding $j$'th qubit included in said set of qubits, said driving pulse being associated with said at least one occurrence of said quantum logic operation G;
   **(b)** $\Delta_j$ being a detuning of said driving pulse; and,
   **(c)** $t$ being said accumulated time from a beginning of said quantum circuit.

8. The method according to any one of claims 1 to 7, wherein said quantum logic operation $G$ is a two-qubit quantum gate.

9. The method according to claim 8, wherein said quantum logic operation G is a *ZZ* gate, and wherein said rotating implementation errors include any one of: *IX, IY, IZ, XI, YI, ZI,XZ, YZ, ZX, ZY* Pauli error terms.

10. The method according to any one of claims 8 to 9, wherein said quantum logic operation $G$ is implemented according to an associated KAK decomposition.

11. The method according to any one of claims 1 to 10, wherein said quantum logic operation $G$ is a microwave-driven quantum gate; preferably, wherein said quantum logic operation G is a two-qubit quantum gate, and wherein said quantum logic operation G is any one of: a Cross-Resonance quantum gate, a Cross-Cross-Resonance quantum gate, and a Mid-Resonance quantum gate.

12. The method according to any one of claims 1 to 11, wherein any one of said prefix gate and said suffix gate are configured to eliminate high order errors included in said rotating implementation errors.

13. The method according to any one of claims 1 to 12, wherein any one of said prefix gate and said suffix gate are based on a characterization of said quantum logic operation G.

14. A quantum processing unit, comprising:

   (a) at least two qubits;
   (b) at least one pulse generator coupled to said at least two qubits, so as to apply pulses to said at least two qubits; and
   (c) a controller communicating with said at least one pulse generator, so as to provide commands to said at least one pulse generator;

   said quantum processing unit being configured to implement the method according to any one of the claims 1 to 14.

15. A non-transient computer readable storage medium, storing computer instructions, wherein the computer instructions are used for causing a computer communicating with a quantum processing unit, to implement the method according to any one of the claims 1 to 14.

**Fig. 1**

$$G = U^{aft}(t)G^{ideal}$$

$$U(t) = \exp\left(\cdots + \frac{i}{2}\sum_j c_j X_j^{\zeta_j(t)}\right)$$

$$X_j^\alpha \stackrel{\text{def}}{=} \hat{X}_j \cos(\alpha) - \hat{Y}_j \sin(\alpha)$$

$$|c_j| \propto \frac{\dot{\Omega}_j}{\Delta_j^2}$$

**200**

$$ES_{a,b;j} = \exp\left(-i\frac{\epsilon}{2}\sum_{\mathcal{P}} A_{a,b;j}(t)\mathcal{P}\right)$$

**250**

Prefix gates $ES_{b;j}$

**210**

Other gates

**215**

$G$

**220**

Other gates

**225**

Suffix gates $ES_{a;j}$

**230**

$ES_{b;j}(t)$
$ES_{a;j}(t)$    **240**

$ES_{b;j}\big(t,\zeta(t)\big)$
$ES_{a;j}\big(t,\zeta(t)\big)$    **245**

**Fig. 2A**

**Fig. 2B**

$$ES_{a,b;j}^{(k)} = \exp\left(-i\frac{\epsilon}{2}\sum_{\mathcal{P}} A_{a,b;j}^{(k)}\left(t_k, \phi^{(k)}(t)\right)\mathcal{P}\right)$$

**Fig. 3A**

**Fig. 3B**

**Fig. 4**

530

PROCESSING
UNIT(S)
**510**

MONITOR
**580**

COMMUNICATION CONNECTION(S)
**570**

OUTPUT DEVICE(S)    **560**

INPUT DEVICE(S)    **550**

STORAGE DEVICE(S)    **540**

SOFTWARE FOR
DISCLOSED TECHINIQUES
**529**

RAM    **527**

MEMORY
**520**

ROM
**522**

BIOS    **1325**

**500**

REMOTE COMPUTER    **590**

MEMORY/STORAGE    **595**

## Fig. 5

670

CONTROLLER
**650**

COMMUNICATION
CONNECTION(S)
**640**

CLASSICAL PROCESSOR
**620**

QUANTUM
PROCESSOR
**610**

MEASUREMENT
DVICE
**680**

MEMORY    **630**

**600**

REMOTE COMPUTER    **660**

MEMORY/STORAGE    **665**

## Fig. 6

Europäisches
Patentamt

European
Patent Office

Office européen
des brevets

**EUROPEAN SEARCH REPORT**

**Application Number**

EP 26 15 0146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LINGLING LAO ET AL: "Software mitigation of coherent two-qubit gate errors", ARXIV.ORG CORNELL UNIVERSITY LIBRARY, 201 OLIN LIBRARY CORNELL UNIVERSITY ITHACA, NY 14853, 8 November 2021 (2021-11-08), XP091096432, DOI: 10.48550/arXiv.2111.04669 * the whole document * | 1-15 | INV. G06N10/70 G06N10/20 G06N10/40 |
| A | DAVID C. MCKAY ET AL: "Efficient Z-Gates for Quantum Computing", ARXIV.ORG CORNELL UNIVERSITY LIBRARY, 201 OLIN LIBRARY CORNELL UNIVERSITY ITHACA, NY 14853, 2 December 2016 (2016-12-02), XP080736464, DOI: 10.48550/arXiv.1612.00858 * the whole document * | 1-15 | |
| A | NOAH KAUFMANN ET AL: "Characterization of coherent errors in gate layers with robustness to Pauli noise", ARXIV.ORG CORNELL UNIVERSITY LIBRARY, 201 OLIN LIBRARY CORNELL UNIVERSITY ITHACA, NY 14853, 17 November 2024 (2024-11-17), XP091929022, DOI: 10.48550/arXiv.2307.08741 * the whole document * | 1-15 | **TECHNICAL FIELDS SEARCHED (IPC)** G06N |
| A | PHILIP KRANTZ ET AL: "A Quantum Engineer's Guide to Superconducting Qubits", ARXIV.ORG CORNELL UNIVERSITY LIBRARY, 201 OLIN LIBRARY CORNELL UNIVERSITY ITHACA, NY 14853, 13 April 2019 (2019-04-13), XP081458630, DOI: 10.1063/1.5089550 * the whole document * | 1-15 | |

-/--

The present search report has been drawn up for all claims

| Place of search | Date of completion of the search | Examiner |
|---|---|---|
| The Hague | 9 April 2026 | Pijn, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                           

& : member of the same patent family, corresponding document

EPO FORM 1503 03.82 (P04C01)

| Europäisches Patentamt European Patent Office Office européen des brevets | **EUROPEAN SEARCH REPORT** | **Application Number** EP 26 15 0146 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GABRIELE CENEDESE ET AL: "Correcting Coherent Errors by Random Operation on Actual Quantum Hardware", ARXIV.ORG CORNELL UNIVERSITY LIBRARY, 201 OLIN LIBRARY CORNELL UNIVERSITY ITHACA, NY 14853, 29 November 2022 (2022-11-29), XP091381694, DOI: 10.48550/arXiv.2211.16114 * the whole document * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 9 April 2026 | Pijn, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                  
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63754721 A